(19) Europäisches Patentamt / European Patent Office / Office européen des brevets

(11) **EP 2 771 602 B1**

(12) **EUROPEAN PATENT SPECIFICATION**

(45) Date of publication and mention
of the grant of the patent:
**22.08.2018 Bulletin 2018/34**

(51) Int Cl.:
*F16K 24/06* (2006.01)      *E03C 1/10* (2006.01)
*E03C 1/22* (2006.01)

(21) Application number: **12844294.4**

(86) International application number:
**PCT/SE2012/051138**

(22) Date of filing: **23.10.2012**

(87) International publication number:
**WO 2013/062469 (02.05.2013 Gazette 2013/18)**

(54) **A THROUGH-FLOW VALVE ARRANGEMENT**

DURCHFLUSSVENTILANORDNUNG

ENSEMBLE SOUPAPE DE RÉGLAGE DE DÉBIT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.10.2011 SE 1151001**
**19.03.2012 SE 1200172**

(43) Date of publication of application:
**03.09.2014 Bulletin 2014/36**

(73) Proprietor: **AB DURGO**
**S-169 03 Solna (SE)**

(72) Inventor: **HANSSON, Hans Oliver**
**S-177 61 Järfälla (SE)**

(74) Representative: **Zacco Sweden AB**
**P.O. Box 5581**
**114 85 Stockholm (SE)**

(56) References cited:
**EP-A1- 1 375 988      EP-A1- 1 375 988
DE-C1- 4 309 085      US-A- 2 259 984
US-A- 2 472 933       US-A- 2 990 843
US-A- 4 556 084       US-A- 4 592 382**

## Description

### Technical Field of the Invention

The present invention relates to a valve arrangement suitable for use with a fluid. The invention also relates to a fluid distribution piping system, such as a tap water system.

### Description of Related Art

In many instances of modern society, fluids are transported or handled via a fluid supply system, which may include a fluid distribution piping system and/or a network of pipes. The fluid may be caused to flow by means of a network fluid pressure provided in the distribution piping system. This is the case in various industries where fluids may be handled by pipes, as well as in towns and cities where potable water may be distributed via a tap water network.

In this connection, the fluid to be handled may be a fluid that has to maintain a prescribed standard of purity. Thus, it is often of utmost importance that the fluid in the pipes is kept uncontaminated.

Sometimes an outflow conduit or delivery pipe, connected to the distribution piping system, is in contact with an external fluid that may be dirty, poisonous or otherwise contaminated. Should the pressure within the distribution piping system fall, there is a risk of an amount of external fluid flowing back into the distribution piping system through the delivery pipe. This could, in turn, lead to contamination of fluid in the distribution piping system, and the contaminated fluid could then be distributed via the distribution piping system, when the network fluid pressure is re-established.

Hence, if the fluid in the fluid distribution piping system is to be kept uncontaminated, it is imperative that such external, possibly contaminated, fluid is prevented from flowing into the fluid distribution piping system.

For this purpose, it is known to provide a valve arrangement for the purpose of preventing such contaminated liquid from flowing into the distribution piping system if the fluid pressure suddenly drops in the distribution piping system. Such drops in fluid pressure in the distribution piping system may occur for a number of reasons during operation of the distribution piping system. The decreased fluid pressure in the distribution piping system may, for example, be caused by damage to a major supply pipe which causes a large fluid leak. When the distribution piping system is embodied as a tap water network, for instance, such a decreased fluid pressure may result from a fire engine suddenly taking/drawing a large volume of water from the tap water network.

EP 1 375 988 discloses an anti-siphoning valve arrangement which may be used in a pressurized tap water system. The valve arrangement according to EP 1 375 988 includes a valve housing having a throughflow channel and at least two vacuum valve units which are disposed at a distance from each other along the channel of the housing whereby air can be sucked from the housing surroundings and into the tap water system via the vacuum valves when the system pressure falls beneath atmospheric pressure.

US 2,990,843 discloses an anti-siphon anti-backflow valve for protection against the flow of contaminated water back into a supply system. The anti-siphon anti-backflow valve according to US 2,990,843 includes a liquid inlet, a liquid outlet and a valve spool having upper and lower valve discs cooperable with an upper valve seat and a lower valve seat, respectively. According to US 2,990,843, the valve spool seats itself upon the lower valve seat so as to achieve the anti-backflow function by closing the liquid inlet.

### Summary

It is an object of the present invention to address the problem of achieving an improved valve arrangement.

This problem is adressed by a valve device for mounting in an environment having a first ambient pressure level ($P_{A60:1}$), the valve device comprising:

a valve housing having

an input for connection to a fluid supply piping system having a second pressure level ($P_{F60:1}$);

an output for connection to a fluid outfeed conduit; and

a housing body positioned between the input and the output, said housing body having

an inner surface forming a first channel for connecting the input with the output; and

a valve unit which, in operation, is capable of switching between a first state and a second state dependent on a pressure difference ($\Delta P$) between said first ambient pressure level ($P_{A60:1}$) and said second pressure level (PF60:1), the valve unit having a movable valve member and a transit channel, wherein

the valve member is adapted to rest against a first valve seat, provided at the bottom of the inner surface of the housing body, such that fluid is prevented from leaving the first channel when the valve unit is in the first state, and wherein

the valve device is such that, when the second pressure level is beneath said first ambient pressure level and said pressure difference exceeds a threshold value, said pressure difference causes the valve unit to assume said second state such that ambient fluid, such as air, can flow into the first channel from the housing environment. The housing body comprises an upper ridge member which co-operates with the movable valve member to separate an upper space of the input side from an upper space of the output side when the second pressure level is beneath said first ambient pressure level and said pressure difference exceeds the threshold value.

The provision of an upper ridge member which co-operates with the movable valve member to separate the upper space of the input side of the first channel from the upper space of the output side of the first channel advantageously achieves an increased anti-siphoning effect and an improved protection against reflux.

The upper ridge member advantageously eliminates or reduces any flow of fluid from the output towards the input since the provision of the upper ridge member acts as a fluid reflux barrier, during said second state when the second pressure level is beneath said first ambient pressure level and said pressure difference exceeds a threshold value. Since, during said second state, air will flow into the first channel from the housing environment, via the transit channel and the first valve seat, towards the fluid input while upper ridge member acts as a fluid reflux barrier, the valve device advantageously achieves an increased anti-siphoning effect.

Whereas the anti-siphoning valve arrangement as disclosed in EP 1 375 988, achieves an anti-siphoning effect of a magnitiude which enables a satisfactory protection against fluid reflux, the claimed solution advantageously enables an equally good or even better protection against fluid reflux while also enabling a physically smaller valve device. Moreover, this solution makes it possible to achieve a satisfactory protection against fluid reflux, while also enabling the valve device to operate with fewer movable parts, when it includes only one valve unit. Hence, the provision of the upper ridge member advantageously enables a physically smaller valve device with fewer movable parts, thus making for a simplified production process. A simplified production process, in turn, advantageously enables a reduced production cost.

Moreover, when the second pressure level in the fluid-to-be-delivered falls beneath said first ambient pressure level and said pressure difference exceeds the threshold value, the valve device allows a flow of ambient fluid, such as ambient air, from the housing environment to the valve device input which advantageously helps equalizing the sub-ambient second pressure level. This pressure-equalizing function advantageously contributes to preventing reflux to the fluid supply piping system from other fluid outfeed conduits which may be connected to the fluid supply piping system at an upstream junction. Hence, whereas the prior art valve disclosed by US 2,990,843 achieves an anti-backflow function by closing the liquid inlet, the valve device discussed in this document may allow a flow of ambient fluid, such as ambient air, from the housing environment to the valve device input which advantageously helps equalizing the sub-ambient second pressure level.

According to an embodiment, the upper ridge member has a surface adapted to meet with a part of the upper surface of the valve member in said second state of the valve device. This solution advantageously substantially eliminates or reduces fluid reflux between the upper surface of the valve member and the upper ridge member. Hence, fluid reflux from the output side towards the input side, is substantially eliminated or reduced since the upper surface of the valve member meets with the upper ridge member to substantially block any flow of fluid therebetween.

According to an embodiment, the upper ridge member is provided in the first channel so as to receive the upper surface of the valve member when the valve unit is in its second state.

According to an embodiment, the first channel has a direction of elongation extending between the input and the output; and

the upper ridge member is provided in the first channel so as to receive the upper surface of the valve member when the valve unit is in its second state; and wherein

the upper ridge member extends in a direction perpendicular to the direction of elongation of the first channel, said upper ridge member co-operating with the movable valve member to form at least one cavity between the upper surface of the valve member and the inner surface of the first channel when the valve unit rests against the ridge member. When the fluid pressure is beneath the atmospheric air pressure and said pressure difference exceeds a threshold value, said pressure difference causes air to stream into channel and towards the input. This stream of flowing air causes a suction of fluid and/or air from the cavity on the input side of the upper ridge member 360 so that the pressure level in the cavity becomes equal to or even lower than the pressure level in other parts of channel. This advantageously leads to an increased force acting on the valve member in the direction towards the upper ridge member 360, since the force acting on the valve member depends on the difference between the pressure on the lower side of valve member and the pressure on the upper surface of valve member.

The provision of a ridge member co-operating with the movable valve member to form at least one cavity leads to an improved anti-siphoning effect, since the increased force acting on the valve member in the direction towards the upper ridge member will hold the valve member in the second state for longer, as compared to the anti-siphoning valve arrangement disclosed in EP 1 375 988.

According to an embodiment the first valve seat (140, 241) is elevated from the bottom (250) of the inner surface of the housing (100).

According to yet an embodiment the first valve seat (140) is placed on a ridge (240) protruding from the bottom (250) of the inner surface of the housing (100).

According to yet an embodiment the elevated valve seat (241) co-operates with said inner surface (105, 122) so as to form a canal (246) such that a limited amount of liquid can flow from the input side (210) towards the output side (220) via the canal; and wherein

the elevated valve seat is adapted to prevent liquid from trickling out of the first channel into said transit channel when the valve device is in its second state, and

a gravitational force causes the limited amount of liquid to have a liquid surface between the plane of the elevated valve seat and bottom of the inner surface of the housing.

According to an embodiment said fluid is a liquid, such as e.g. water.

According to yet an embodiment said fluid supply piping system is a water system for supplying water of potable quality.

According to an aspect, there is a tap water system for supplying water of potable quality, the tap water system comprising:

a water supply pipe provided in a building; and

a valve device according to any of the embodiments or aspects discussed above, the valve device being connected to said water supply pipe.

According to some embodiments the invention discloses a valve arrangement adapted for connection to a fluid supply piping system having a fluid supply pressure level for supplying a first fluid and adapted for connection to a fluid outfeed conduit. The valve arrangement is adapted to be mounted in an environment having an ambient pressure level.

The valve arrangement comprises a valve housing having an input having an input cross section area. The input is adapted for connection to the fluid supply piping system. The valve arrangement also comprises an output having an output cross section area. The output is adapted for connection to the fluid outfeed conduit. The valve arrangement further comprises a housing body positioned between the input and the output. Said housing body has an inner surface forming a first channel for connecting the input with the output. The first channel has a direction of elongation extending between the input and the output. The housing body also has a bore extending from the outer environment to the channel such that the channel and the bore intersect each other. The housing has a ridge member provided in the first channel and a valve unit.

The valve unit is, in operation, capable of switching between a first state and a second state and it comprises a movable valve member. The valve member is movable within the bore and has a second valve member surface facing a first valve seat. The valve member is adapted to rest against the first valve seat when the valve unit is in the first state, such that a first fluid is prohibited from flowing from the channel through the bore to the outer environment and the valve member is adapted to rest against the ridge member when the valve unit is in the second state such that a second fluid is permitted to flow through the second fluid passage from the outer environment into the supply piping system. The valve unit switches between the first state and the second state dependent on a pressure difference between said ambient pressure level acting on the second valve member surface and a pressure level acting on at least a part of the first valve member surface.

According to a first preferred embodiment the ridge member is positioned such that the smallest cross section area of a part of the channel facing the valve member is larger than the smaller of the input cross section area and the output cross section area when the valve unit is in the first state. This solution advantageously provides a high degree of anti-siphoning effect and an very good protection against reflux, in the second state of the valve arrangement, while minimising the throughflow resistance so as to enable a large maximum flow of the first fluid from the first fluid input to the first fluid output during the first state of the valve arrangement. Hence, this technical feature advantageously avoids the ridge member becoming a part of a "bottle neck choke point" for the the flow of the first fluid when the valve unit is in the first state and when the first fluid flows from the inlet towards the outlet. Hence, the smallest area limiting the flow of the first fluid through the valve arrangement may be either the input cross section area or the output cross section area. The technical feature according to this embodiment limits the position of the upper ridge member in the output direction. If the upper ridge member is positioned too far in the direction towards the output, it will restrict the flow of the second fluid. The feature also limits the height of the upper ridge member. If the ridge member is too high, the smallest cross section area of a part of the channel facing the valve member will be smaller than the smaller of the input cross section area and the output cross section area and the upper ridge member will restrict the flow of the first fluid in the normal state when the valve unit is closed.

According to a second preferred embodiment the valve unit has a first valve member surface facing the channel and the ridge member. The first valve member surface has an input portion having an input surface area and an output portion having an output surface area. The valve unit also has second valve member surface facing a first valve seat. The valve member is adapted to rest against the ridge member when the valve unit is in the second state such that a passage part is obtained from the outer environment to an anti-siphoning inlet having an anti-siphoning inlet area, which is restricted by an edge of the second valve member surface and by an inner wall of the input. The input surface area faces a first cavity on the input side of the valve housing, and the output surface area may face a second cavity on the output side of the valve housing such that the first cavity is separated from the second cavity.

According to the second preferred embodiment the ridge member is positioned such that the input surface area is larger than the output surface area when the valve unit is in the second state. This feature has the advantage that the reflux of the first fluid from the outfeed conduit is reduced. The valve member moves faster from the closed position to the open position. This is due to the fact that the force acting to lift the valve member depends on the pressure difference between the lower and upper surfaces of valve member. The force acting to lift the valve member also depends on the respective areas of the lower and upper surfaces of valve member.

The relatively large portion of the upper surface of the valve member facing the input surface area, cause a stronger force directed to pushing the valve member towards the open position. Accordingly, the provision of the ridge member at a position such that the input surface area is larger than the output surface area may co-operate with the sub-pressure originating from input side to cause a stronger force directed to pushing the valve member towards the ridge member.

When the fluid pressure is re-established, on the other hand, the relatively large portion of the input surface area, will interact with the upper ridge member to cause a large force directed to moving the valve member to the closed position.

If the minimum pressure level during normal condition in the pipe section is low there is a risk that the valve opens up spontaneously and that fluid leaks out. This is due to the fact the pressure level fluctuates and temporarily can be lower than the atmospheric pressure level. In this case it can happen that the weight of the valve member cannot compensate for the pressure difference and the valve unit opens up. By making the input surface area larger than the output surface area, the pressure in the channel on the input side of the ridge member acts on a larger area of the valve member than the pressure in the channel on the output side of the ridge member, which results in that the force that acts on the valve member in order to close the valve member will be larger. The technical feature of making the input surface area larger than the output surface area, limits the position of the upper ridge member in the input direction.

According to the second preferred embodiment an area relation, being the ratio between the smallest cross section area of the passage part and the anti-siphoning inlet area is larger than 2 and the anti-siphoning inlet area is larger than zero. This feature has also the advantage that the reflux of the first fluid from the outfeed conduit is reduced. This is due to the physical fact that that the speed of a flow of fluid increases when the area decreases and when the speed increases the pressure around the flow of fluid decreases. This means that by letting the anti-siphoning inlet area be smaller than the smallest cross section area of the passage part, the cross section area for the flow the second fluid is reduced and the velocity of the second fluid through the valve unit increases. The intense flow of the second fluid sweeps out the second fluid from the first cavity. This decreases the pressure in the first cavity, which sucks the valve member even harder towards the upper ridge member. If the height of the upper ridge member is decreased, the anti-siphoning inlet area will be enlarged. Therefore this feature limits the height of the upper ridge member so that it cannot be too low.

According to a third preferred embodiment, the features of the first preferred embodiment and of the second preferred embodiment are balanced or combined. This combination of features advantageously enables a balance between the conflicting requirements of

1) minimising the throughflow resistance so as to enable a large maximum flow of the first fluid from the first fluid input to the first fluid output during the first state of the valve arrangement, and
2) achieving a large amount of protection against reflux of the first fluid from the outfeed conduit

in a throughflow anti-siphoning valve.

According to yet a further embodiment the invention the valve unit switches between the first state and the second state dependent on a force difference between a first force dependent on fluid pressure acting on said first valve member surface, and a second force dependent on fluid pressure acting on said second valve member surface.

An embodiment includes a valve arrangement adapted for connection to a fluid supply piping system having a fluid supply pressure level for supplying a first fluid and adapted for connection to a fluid outfeed conduit. The valve arrangement is adapted to provide protection against a reflux of a first fluid from the outfeed conduit when the pressure level in the fluid supply piping system suddenly drops.

The valve arrangement comprises a housing having an input, an output and a housing body. The housing body comprises a first channel which may be provided with a ridge member, a bore and a valve member. The valve member is movable inside the bore and is adapted to rest against a valve seat in a closed position and it may be adapted to rest against the ridge member in an open position. A second fluid, from the environment, can enter through the bore and continue into the fluid supply piping system when the valve member is in the open position.

The ridge member may have a position and a size such that an adequate protection against reflux of the first fluid from the outfeed conduit is obtained, while minimising the throughflow resistance so as to enable a large maximum flow of the first fluid from the first fluid input to the first fluid output during the first state of the valve arrangement, i.e. when the valve member is in the closed position.

### Brief Description of the Drawings

For simple understanding of the present invention, it will be described by means of examples and with reference to the accompanying drawings, of which:

**Figure 1** illustrates an embodiment of a fluid distribution system comprising a fluid distribution piping system.

**Figure 2** is an illustration of the fluid distribution system of Figure 1 when a decreased fluid pressure level occurs in the fluid distribution piping system.

**Figure 3A** is a sectional side view of an anti-siphoning valve device that may be useful for understanding the invention.

**Figure 3B** is a sectional side view of another anti-siphoning valve device that may be useful for understanding the invention.

**Figures 4A and 4B** are sectional perspective side views of an embodiment of the central part of the valve device shown between lines X1 and X2 in Figure 3A and /or Figure 3B.

**Figure 4C** is a sectioned side view of the central part 200 of the valve housing 100 of Figure 4B .

**Figure 4D** is a cross-sectional view taken along line C-C of FIG 4C.

**Figure 4E** is a sectioned side view of the central part 200 of the valve housing 100 of Figure 4A, illustrating the valve device 70 in the closed state.

**Figure 4F** is a cross-sectional view taken along line D-D of FIG 4E.

**Figures 5A and 5B** are sectional perspective side views of the central part 200 of a valve arrangement 70 that may be useful for understanding the invention.

**Figure 5C** is a sectioned side view of the central part 200 of the valve housing 100 of Figure 5B, illustrating the valve unit in the open state.

**Figure 5D** is a cross-sectional view taken along line A-A of FIG 5C.

**Figure 5E** is a sectioned side view of the central part 200 of the valve housing 100 of Figure 5A, illustrating the valve arrangement 70 in the closed state.

**Figure 5F** is a cross-sectional view taken along line B-B of FIG 5E.

**Figures 6A and 6B** are alternative sectional perspective side views of the central part 200 of a valve arrangement 70 that may be useful for understanding the invention.

**Figure 6C** is a sectioned side view of the central part 200 of the valve housing 100 of Figure 6B, illustrating the valve unit in the open state.

**Figure 6D** is a cross-sectional view taken along line C-C of FIG 6C.

**Figures 7A and 7B** are alternative sectional perspective side views of the central part 200 of a valve arrangement 70 that may be useful for understanding the invention.

**Figure 7C** is a sectioned side view of the central part 200 of the valve housing 100 of Figure 6B, illustrating the valve unit in the open state.

**Figure 7D** is a cross-sectional view taken along line A-A of FIG 7C.

**Figure 7E** is a sectioned side view of the central part 200 of the valve housing 100 of Figure 7A, illustrating the valve arrangement 70 in the closed state.

**Figure 7F** is a cross-sectional view taken along line B-B of FIG 7E.

**Figure 8A** is a sectioned side view of the central part 200 of the valve housing 100, illustrating the valve unit in the open state according to an embodiment of the invention.

**Figure 8B** is a partially sectioned view taken along line A-A of FIG 8A.

**Figure 8C** is a sectioned side view of the central part 200 of the valve housing 100, illustrating the valve arrangement 70 in the closed state.

**Figure 8D** is a partially sectioned view taken along line C-C of FIG 8C.

**Figures 9A and 9B** are sectional perspective side views of the central part 200 of the valve arrangement 70 according to an embodiment of the invention.

**Figure 9C** is a sectioned side view of the central part 200 of the valve housing 100 of Figure 9B, illustrating the valve unit in the open state.

**Figure 9D** is a cross-sectional view taken along line C1-C2 of FIG 9C.

**Figure 9E** is a sectioned side view of the central part 200 of the valve housing 100 of Figure 9A, illustrating the valve arrangement 70 in the closed state.

**Figure 9F** is a cross-sectional view taken along line D-D of FIG 9E.

**Figures 10A and 10B** are sectional perspective side views of the central part 200 of the valve arrangement 70 according to another embodiment of the invention.

**Figure 10C** is a sectioned side view of the central part 200 of the valve housing 100 of Figure 10B, illustrating the valve unit in the open state.

**Figure 10D** is a cross-sectional view taken along line A-A of FIG 10C.

**Figure 10E** is a sectioned side view of the central part 200 of the valve housing 100 of Figure 10A, illustrating the valve arrangement 70 in the closed state.

**Figure 10F** is a cross-sectional view taken along line B-B of FIG 10E.

**Figure 11A** shows the valve housing 200 seen from below.

**Figure 11B** shows the valve housing seen from the input side.

**Figure 11C** shows the valve housing seen from the output side.

**Figure 12** illustrates the anti-siphoning inlet area F.

**Figure 13A** shows the limiting area G2.

**Figure 13B** shows the limiting area G1.

**Figure 13C** shows as sectional perspective side view of the valve arrangement according to an embodiment of the invention. The figure illustrates the areas G1, G2 and F.

**Figure 14** shows the principles of an embodiment with the central shaft pointing upwards.

**Figure 15** shows the principles of an embodiment without any central shaft.

**Figure 16** shows the valve housing seen from below.

**Figure 17** shows a cross-sectional view of an embodiment of the invention with the bore extending upwards.

**Detailed Description of Embodiments**

In the following description similar features in different embodiments will be indicated by the same reference numerals.

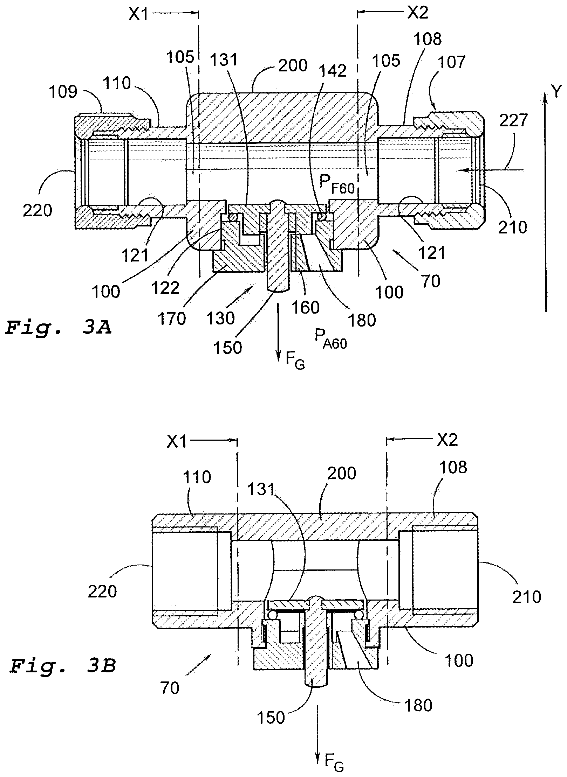

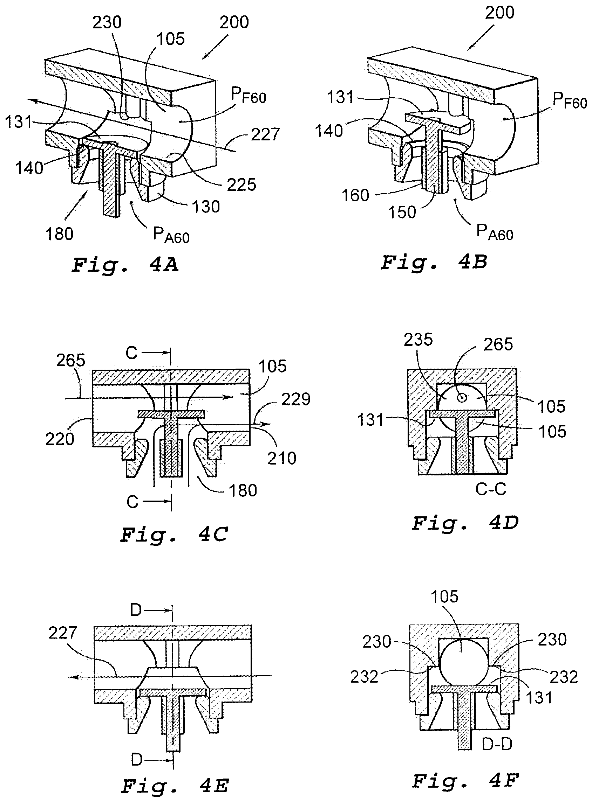

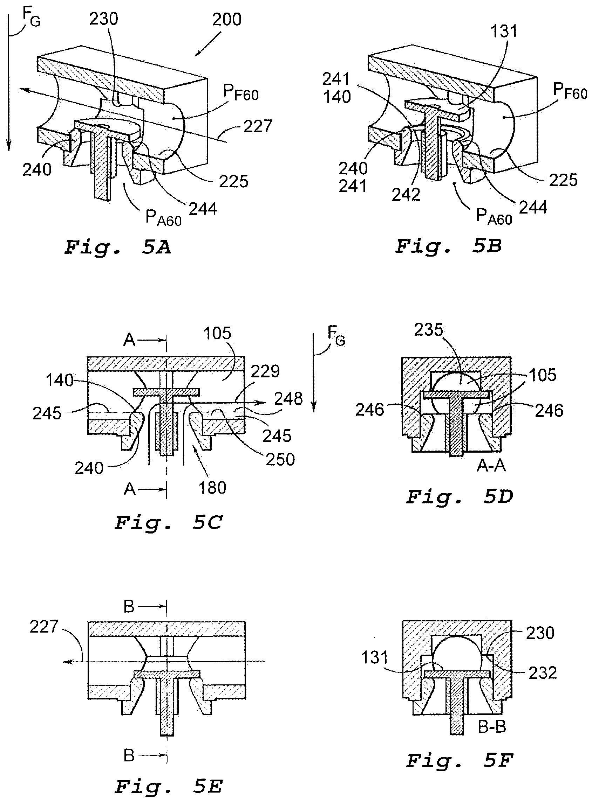

When the detailed description refers to a feature or a reference in Figure 3, this means that the feature or reference can be seen in figure 3A and/or in figure 3B. When the detailed description refers to a feature or a reference in Figure 4, this means that the feature or reference can be seen in all or some of Figures 4A- 4F. The same applies also to Figure 5, Figure 6, Figure 7, Figure 8, Figure 9 or Figure 10.

When the detailed description refers to "the Figure 3 embodiment", this means that the description refers to the embodiment showed in Figures 3A - 3B. When the detailed description refers to "the Figure 4 embodiment", this means that the description refers to the embodiment showed in Figures 4A - 4F. The same applies also to Figure 5, Figure 6, Figure 7, Figure 8, Figure 9 or Figure 10.

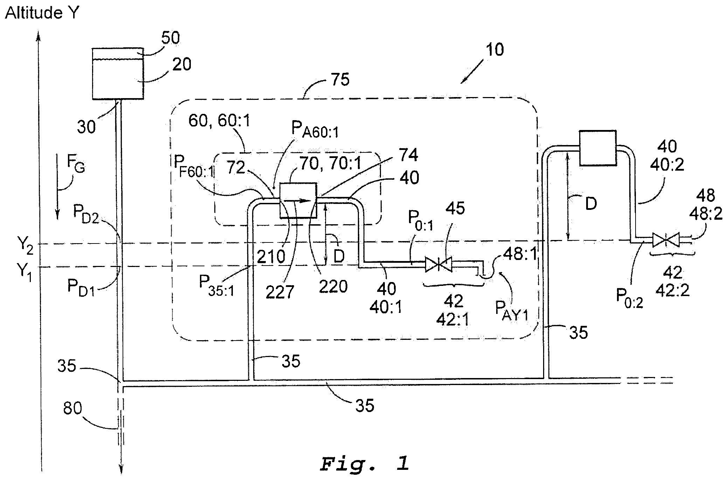

Figure 1 illustrates an embodiment of a fluid distribution system 10. The fluid distribution system 10 of figure 1 includes a fluid source tank 20 having an output 30 for delivery of fluid to a fluid distribution piping system 35. The fluid distribution piping system is arranged so that fluid can be provided with a certain fluid pressure level Po at one or plural fluid outfeed conduits 40. An outfeed conduit 40 may be connected to an associated output 42. The fluid output 42 may include a valve 45 that can be operated to open for the purpose of letting fluid flow out of an associated output opening 48. When the valve 45 is closed no fluid can flow out of the associated output opening 48.

The fluid distribution system 10 may be designed so that the fluid pressure level $P_O$ at a fluid output 42 has a minimum pressure level $P_{OM}$ under normal conditions.

According to an embodiment, the fluid source tank 20 is pressurized such that a suitable fluid pressure is achieved at the output 30 of the fluid source tank 20. This may be achieved by means of a fluid pressurizing pump (not shown). In this manner the fluid source tank 20 may be pressurized so that the fluid pressure level $P_O$ at a fluid output 42 has a minimum pressure level $P_{OM}$ under normal conditions.

According to another embodiment, the fluid pressure is achieved by means of gravitation and a difference in altitude over the sea level between a fluid level 50 in the fluid source tank 20 and the altitude of the fluid output 42. Hence, a gravitational force may act, in the direction of arrow $F_G$ in Figure 1, on the fluid in the fluid distribution piping system 35 so that the fluid pressure level $P_O$ at a fluid output 42 has a minimum pressure level $P_{OM}$ under normal conditions.

The fluid distribution piping system 35 may have a pipe 72 for connection to the valve arrangement 70. The pipe 72 is part of a pipe section 60 which is positioned higher than the output opening 48. According to an embodiment, the pipe section 60 may include a fluid conduit having an inverted generally U-shaped bend. In other words, the pipe section 60 may include a pipe section generally shaped as the letter "U" turned upside down.

Moreover, the outfeed conduit 40 may have a pipe 74 for connection to the valve arrangement 70. The valve arrangement 70 may be placed at a certain height D above the fluid output 42 that connects with the pipe 72 of the fluid distribution piping system 35. According to an embodiment the fluid distribution system 35 may be arranged so that the certain distance D is at least 100 mm in the direction opposite to the direction of the gravitational force $F_G$. According to another embodiment the certain distance D is at least 300 mm.

Accordingly, the valve arrangement 70, the pipe 74, the outfeed conduit 40 and the fluid output 42 constitutes a fluid contamination preventer 75. According to an embodiment of the fluid contamination preventer 75, the valve device 70 is placed at the certain height D above the fluid output 42.

The fluid contamination preventer 75, including the valve arrangement 70, functions to prevent reflux of fluid from the output opening 48 to the fluid distribution piping system 35.

The fluid distribution system 10 is arranged to provide a certain fluid pressure to the fluid distribution piping system 35. With reference to Figure 1, the received fluid pressure $P_{35:1}$ in piping system 35 at altitude y1 will be equal to the delivered fluid pressure $P_{D1}$ at the same altitude y1, under normal conditions when the fluid is not flowing. Whereas the flow of the fluid affects these pressure levels, the received fluid pressure $P_{35:1}$ in piping system 35 at altitude y1 will be dependent on the delivered fluid pressure $P_{D1}$ at the same altitude y1, under normal conditions also when the fluid is flowing. Moreover, the pressure level $P_{O:1}$, in outfeed conduit 40:1 at the same altitude y1, will be substantially equal to the received fluid pressure $P_{35:1}$ in piping system 35 at altitude y1, under normal conditions, when valve 42:1 is closed. Opening valve 42:1 will, under normal conditions, lead to pressure level $P_{O:1}$, in outfeed conduit 40:1 becoming lower than the fluid pressure level $P_{35:1}$ in piping system 35 at altitude y1, and thus the fluid will flow out of the associated output opening 48:1 since the higher pressure P35:1 will force fluid towards the lower pressure $P_{O:1}$ in outfeed conduit 40:1. This assumes, of course, that the atmospheric pressure $P_{Ay1}$ of the environment surrounding output opening 48:1 is lower than the fluid pressure level $P_{O:1}$, in outfeed conduit 40:1.

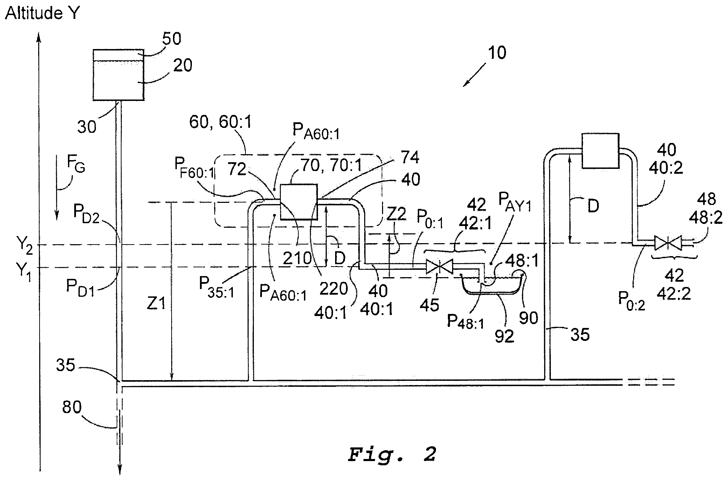

**Figure 2** is an illustration of the fluid distribution system 10 of Figure 1 when the pressure level $P_{35:1}$ of the fluid is decreased (see Figure 2). The decreased pressure level $P_{35:1}$ may be caused e.g. by a sudden large outflow of fluid at point 80 in the fluid distribution piping system 35 (See Figure 2). The large outflow of fluid at point 80 may, for example, be caused by damage to the supply pipe at point 80 causing a large fluid leak. When the distribution piping system is embodied as a tap water network, for instance, such a decreased fluid pressure may result from a fire engine suddenly taking/drawing a large volume of water from the tap water network at point 80, or at a position downstream from point 80. When the output opening 48:1 is associated with a tap at one of the highest floors of a high rise building, such as a so called "sky scraper", the decreased fluid pressure may result when many taps are opened at the same time at lower floors of that building.

As illustrated in Figure 2, output opening 48:1 may at this point of time be submerged under the fluid surface 90 of a fluid reservoir 92. When the fluid distribution system 10 is a tap water network 10, the fluid reservoir 92 may be a bath tub 92 filled with dirty water. If the tap 45:1 is in an open state and the fluid pressure level $P_{35:1}$ in the fluid distribution piping system 35 drops below the pressure level $P_{48:1}$ in the fluid at output opening 48:1, then the siphon effect would tend to siphon water back out of the reservoir 92 and into the fluid distribution piping system 35, if no appropriate anti-siphoning valve arrangement 70 were included in the piping section 60. Hence, the provision of an anti-siphoning valve arrangement 70 may avoid contamination of the fluid in the pipes 35 of fluid distribution piping system 35. Another example of a risky set-up includes a garden hose connected to tap valve 45. If the garden hose, for example, is left on the ground in a garden with the tap valve 45 in an open state, a water puddle may result, and in case of a sudden decrease of the fluid pressure in the piping system 35, then the siphon effect would tend to siphon water from that puddle and into the fluid distribution piping system 35, if no appropriate anti-siphoning valve arrangement 70 were included in the piping section 60.

However, such siphoning effect will inherently result in a decreased fluid pressure $P_{F60:1}$ in the pipe section 60:1. In fact, when the pipe section 60:1 is arranged at a certain distance D above the output opening 48:1, then the fluid pressure $P_{F60:1}$ will be correspondingly lower than the fluid pressure P48:1 in the reservoir 92. It is to be understood that the fluid pressure P48:1 in the reservoir 92 will be equal to, or higher than, the atmospheric pressure at the surface 90 of the fluid in reservoir 92. Hence, the siphoning effect will inherently result in a fluid pressure $P_{F60:1}$ in the pipe section 60:1 reaching a level being lower than the atmospheric pressure $P_{A60:1}$ in the atmosphere surrounding the anti-siphoning valve arrangement 70.

An embodiment of an anti-siphoning valve arrangement

**Figure 3** is a sectional side view of an anti-siphoning valve arrangement 70 that may be useful for understanding the invention. Figure 3 shows an elongate tubular valve housing 100 that includes a throughflow channel 105. The valve housing 100 of the valve arrangement 70 has an input 210, at a first end 108 of the housing 100, for connection to the pipe 72 of the fluid supply piping system 35. The valve housing 100 of the valve arrangement 70 also has an output 220, at a second end 110 of the housing 100, for connection to a fluid outfeed conduit 74, 40.

The connection between input 210 and pipe 72 and the connection between the output 220 and the fluid outfeed conduit 74, 40 may be achieved in a number of different manners.

According to an embodiment, there is provided a first pipe connector 107 at the first end 108 of the housing 100, and a second pipe connector 109 are provided at the second end 110 of the housing 100. The inside surface of the ends 108, 110 of the housing 100 may accordingly include recessed portions 121 for receiving the respective ends of the pipes 72 and 74 (See Figs 1 and 2). The illustrated pipe connectors 107 and 109, respectively, may include clamping ring couplings. When the recesses 121 correspond to the wall thickness of the pipes 72 and 74 (See Figs 1 and 2), the channel 105 may have a cross-sectional area corresponding to the free cross-sectional area of the pipes 72 and 74.

The housing 100 is provided with a bore 122 extending from the lower outer surface of the housing 100 to the channel 105. A valve unit 130 may be mounted, e.g. screwed, into the bore 122. The bore 122 intersects the channel 105 and is shown to have a slightly larger diameter than the channel 105 so as to be able to receive a valve plate 131. The valve plate 131 may have a circular shape with a diameter smaller than the diameter of the bore 122. Alternatively the diameter of the valve plate 131 may correspond to the diameter of the bore 122. The valve plate 131 can rest sealingly against a first seat 140 (See Fig 4A and/or 4B) that may carry a sealing means 142. The sealing means 142 may be embodied by an O-ring 142 (See Fig 3).

The valve plate 131 is carried by a central shaft 150 guided in a guide 160. The guide 160 is carried by a bush 170 through the medium of radially extending arms, wherein the bush 170 is fixed and connected sealingly to the wall of the bore 122 so that the bush 170 will have a transit channel 180 that is screened by the valve plate 131. The cross-sectional area of the transit channel 180 may substantially correspond to the cross-sectional area of the housing channel 105. According to an embodiment, the valve plate 131 may be located outside the cross-sectional area of the channel 105 when said plate rests on its seat 140, as illustrated in Fig. 3.

It will be evident from Fig. 3 that the valve housing need only have a wall thickness that will enable a conventional connection to be established between the valve unit 130 and the wall of the bore 122, wherewith the air transit channel 180 of the valve unit 130 may have a cross-sectional area corresponding to that of the channel 105. The valve unit 130 may therefore be made with only small, if any, protrusions from the valve housing 100.

Embodiments of the valve arrangement 70 may be produced in different sizes commensurate with the dimensions of conduits or pipes 72 and 74, respectively.

**Figures 4A and 4B** are sectional perspective side views of an embodiment of the central part, between lines X1 and X2 in Figure 3, of the valve arrangement 70. Embodiments of the central part of the valve housing 100 are herein referred to by reference numeral 200.

Figure 4A illustrates the central part 200 of the valve arrangement 70 when the valve arrangement 70 is in its closed position, i.e. when the valve plate 131 rests sealingly against the first seat 140. The first seat 140 may carry a sealing means 142 (see Fig 3).

Figure 4B illustrates the central part 200 of the valve arrangement 70 when the valve arrangement 70 is in an open position, i.e. when the valve plate 131 is at a distance away from the first seat 140.

An embodiment of the valve arrangement 70 is suitable for mounting in an air environment having an ambient pressure $P_{A60:1}$ (See Fig 3). The valve housing 100 of the valve arrangement 70 has an input 210 for connection to a pipe 72 of the fluid supply piping system 35 having a fluid pressure $P_{F60:1}$ and an output 220 for connection to a fluid outfeed conduit 74, 40. The housing body 100, 200, 130, which is positioned between the input 210 and the output 220 has a channel 105 for connecting the input 210 with the output 220; said channel 105 being defined by an inner surface 225 of said housing. Arrow 227 indicates the direction of flow of the fluid through channel 105 when the valve unit 130 is in the closed state (See Fig 4A and 4E) and when the valve 45 (See Figure 1) is in an open state.

The valve unit 130 has a closed state and an open state dependent on a pressure difference $\Delta P$ between the pressure $P_{F60:1}$ in the channel 105 and the ambient pressure $P_{A60:1}$ of the air surrounding the valve arrangement 70. The valve unit 130 advantageously assumes the open state when the fluid pressure $P_{F60:1}$ is beneath the ambient pressure $P_{A60:1}$ such that air can be sucked from the housing environment into the channel 105 so as to prevent reflux of fluid from said fluid outfeed conduit 74, 40.

**Figure 4C** is a sectioned side view of the central part 200 of the valve housing 100 of Figure 4B, illustrating the valve unit in the open state. The direction of flow of air from the environment into the channel 105, via transit channel 180, is illustrated by arrow 229 in Figure 4C.

**Figure 4D** is a cross-sectional view taken along line C-C of FIG 4C.

**Figure 4E** is a sectioned side view of the central part 200 of the valve housing 100 of Figure 4A, illustrating the valve arrangement 70 in the closed state.

**Figure 4F** is a cross-sectional view taken along line D-D of FIG 4E.

It can be clearly seen in Figures 4A, 4B, 4C, 4D, 4E, 4F that the valve plate 131 can rest against a shoulder 230 in the open state of the valve unit. The shoulder 230 has a surface 232 adapted to meet with a part of the upper surface of the valve plate 131 in the open state of the valve arrangement 70. The shoulder 230 may be provided on at least one side of the channel 105 such that when the valve plate 131 rests against the shoulder 230 a portion 235 of the channel 105 remains open above the upper surface of valve plate 131.

With reference to Figure 4F, a there may be provided one shoulder 230 on each side of the channel 105. The shoulders 230 may protrude into the cross-sectional area of the channel 105, as can be seen in Figs 4D and 4F. The shoulders 230 may be shaped and dimensioned such that when the valve plate 131 rests against the shoulders 230, then the upper surface of valve plate 131 will be positioned in the channel 105 such that a portion 235 of the channel 105 remains above the upper surface of valve plate 131.

### An elevated first valve seat embodiment

**Figures 5A and 5B** are sectional perspective side views of the central part 200 of a valve arrangement 70 that may be useful for understanding the invention.

Figure 5A illustrates the central part 200 of the valve arrangement 70 when the valve arrangement 70 is in its closed position, i.e. when the valve plate 131 rests sealingly against the first seat 140, and Figure 5B illustrates the central part 200 of the valve arrangement 70 when the valve arrangement 70 is in an open position, i.e. when the valve plate 131 is at a distance away from the first seat 140. The first seat 140 may carry a sealing means 142 (see Fig 3).

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 5C** is a sectioned side view of the central part 200 of the valve housing 100 of Figure 5B, illustrating the valve unit in the open state. The direction of flow of air from the environment into the channel 105, via transit channel 180, is illustrated by arrow 229 in Figure 5C. **Figure 5D** is a cross-sectional view taken along line A-A of FIG 5C.

**Figure 5E** is a sectioned side view of the central part 200 of the valve housing 100 of Figure 5A, illustrating the valve arrangement 70 in the closed state.

**Figure 5F** is a cross-sectional view taken along line B-B of FIG 5E.

With reference to Figures 5A, 5B, 5C, 5D, 5E, 5F the valve plate 131 can rest against a shoulder 230 in the open state of the valve unit. The shoulder 230 has a surface 232 adapted to meet with a part of the upper surface of the valve plate 131 in the open state of the valve arrangement 70. The shoulder 230 may be provided on at least one side of the channel 105 such that when the valve plate 131 rests against the shoulder 230, then a portion 235 of the channel 105 remains above the upper surface of valve plate 131.

With reference to Figure 5F, a there may be provided one shoulder 230 on each side of the channel 105. The shoulders 230 may protrude into the cross-sectional area of the channel 105, as can be seen in Figs 5D and 5F. The shoulders 230 may be shaped and dimensioned such that when the valve plate 131 rests against the shoulders 230, then the upper surface of valve plate 131 will be positioned in the channel 105 such that a portion 235 of the channel 105 remains above the upper surface of valve plate 131.

According to the Figure 5A/5B/5C/5D/5E/5F embodiment of the valve arrangement 70, the first valve seat 140 is placed on a ridge 240 protruding from the bottom of the inner surface of the housing 100.

The ridge 240 advantageously prevents residual fluid 245 from trickling out via transit channel 180 when the valve unit is in its open position. Instead any residual fluid in the channel 105 of the housing portion 200 will remain on the bottom 250 of channel 105 due to the force of gravity $F_G$ when the valve arrangement 70 is mounted as illustrated in Figure 5C, such that the force of gravity $F_G$ acts in the direction parallel to the length of shaft 150. Hence, the valve seat 140 and the ridge 240 co-operate to form an elevated valve seat 241 such that a certain amount of fluid 245, which may be present on the bottom of the inner surface of housing 100, is prevented from trickling out through transit channel 180. The elevated valve seat 241 protrudes from the bottom of the inner surface of the housing 100. According to a preferred embodiment, the outer side wall 244 of the elevated valve seat 241 co-operates with the inner wall of the bore 122 so as to form a channel 246 (See Figure 5D). The provision of channel 246 advantageously allows for a limited flow of a residual fluid 245 between the input side 210 and the output side 220 of valve arrangement 70, without any fluid flowing out the transit channel 180, even when the valve arrangement 70 is in its open position. When the force of gravity $F_G$ acts in the direction parallel to the length of shaft 150, then a limited amount of fluid 245, which may be present inside housing 100, is drawn to the bottom of the inner surface so that a liquid surface 248 is formed. When the limited amount of fluid 245 is so limited that the liquid surface 248 is below the height of the ridge 240, then the ridge functions to prevent any liquid from leaking out.

Hence, the Figure 5 embodiment of valve arrangement 70 advantageously eliminates, or substantially reduces the risk for leakage of fluid, not only when the valve unit is in the closed position but also when the valve unit is in the open position.

In fact, tests indicate that the provision of the elevated valve seat 241 having non-sharp edges actually leads to an increase in air flow capacity. This is believed to depend on advantageous aerodynamic effects, occurring when an air stream passes over a ridge 240 having rounded edges or non-sharp edges. In this connection it is noted that according to a preferred embodiment, the ridge 240 has first ridge side wall 242 and second ridge side wall 244, respectively. The first ridge side wall 242 and second ridge side wall 244 are non-perpendicular in relation to the substantially flat plane of the first valve seat 140, such that air can flow 229 over a somewhat rounded surface (See Figure 5C). In effect, it has been found that a rounded shape of the ridge 240 functions to improve the flow of air.

An upper second valve seat embodiment

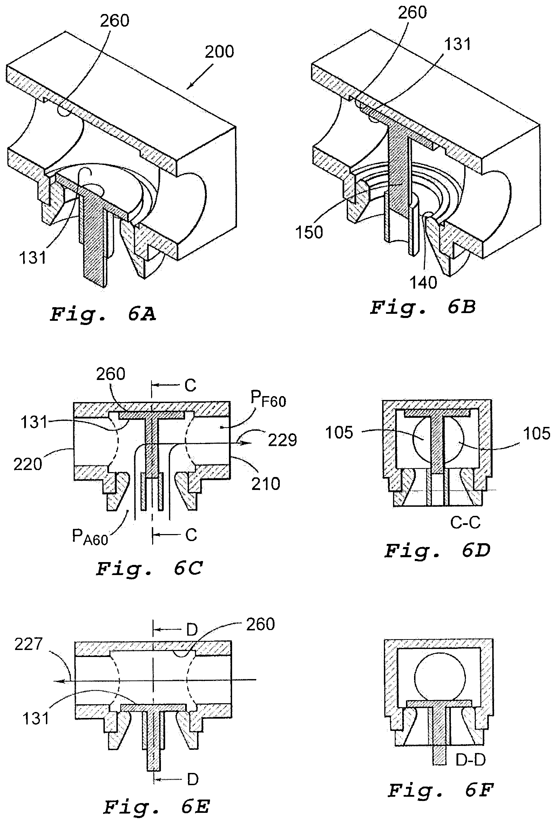

**Figures 6A and 6B** are sectional perspective side views of the central part 200 of a valve arrangement 70 that may be useful for understanding the invention.

Figure 6A illustrates the central part 200 of the valve arrangement 70 when the valve arrangement 70 is in its closed position, i.e. when the valve plate 131 rests sealingly against the first valve seat 140, and Figure 6B illustrates the central part 200 of the valve arrangement

70 when the valve arrangement 70 is in an open position. The figure 6 embodiment of the valve arrangement 70 advantageously includes an upper valve seat 260, whereas the first valve seat is as described in connection with Figures 4A-4F above.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 6C** is a sectioned side view of the central part 200 of the valve housing 100 of Figure 6B, illustrating the valve unit in the open state. The direction of flow of air from the environment into the channel 105, via transit channel 180, is illustrated by arrow 229 in Figure 6C. **Figure 6D** is a cross-sectional view taken along line C-C of FIG 6C.

With reference to Figure 4C, it can be seen that in the Figure 4 embodiment a portion 235 of the channel 105 remains above the upper surface of valve plate 131 when the valve plate 131 is in its fully opened position. The provision of such a portion 235 makes it possible, at least theoretically, for fluid or air to flow above the upper surface of valve plate 131 from the output 220 towards the input 210 when the valve plate 131 is in its fully opened position, as illustrated by arrow 265 (See Figure 4C). **By contrast, with reference to Figure 6C, the upper valve seat 260 may advantageously be shaped and dimensioned such that when the valve plate 131 rests against the upper valve seat 260 then no portion of the channel 105 remains open above the upper surface of valve plate 131.**

**In other words, the upper valve seat 260 may advantageously be shaped and dimensioned such that when the valve plate 131 rests against the upper valve seat 260 then the output side 220 and the input side 210 of valve arrangement cannot communicate via any space above the upper surface of valve plate 131.** The valve plate 131 co-operates with the upper valve seat 260 such that when the valve plate 131 rests on the upper valve seat 260 then substantially no fluid can flow above the upper surface of valve plate 131 between the output side 220 and the input side 210 of valve arrangement.

Hence, when the valve plate 131 rests on the upper valve seat 260 it may rest substantially sealingly against the upper valve seat 260.

Accordingly, the valve arrangement 70 may include **a valve housing** 100 having:

**an input** 210 for connection to a fluid supply piping system 72, 35 having a fluid pressure $P_{F60:1}$;

**an output** 220 for connection to a fluid outfeed conduit 74, 40; and

**a housing body** 100, 200, 130 positioned between the input 210 and the output 220, said housing body having **a channel 105** for connecting the input 210 with the output 220; wherein the housing body comprises

**a valve unit 130** having a closed state and an open state dependent on a pressure difference $\Delta P$ between the fluid pressure PF60:1 and said ambient pressure PA60:1; wherein

the valve plate 131 rests sealingly against a first valve seat 140, when the valve unit 130 is in the closed state, such that fluid is prevented from leaving the channel 105; and wherein

the valve arrangement 70 is such that in operation said atmospheric pressure PA60:1 causes said valve plate 131 to rest on an upper valve seat 260 when the fluid pressure PF60:1 is beneath the atmospheric pressure PA60:1 such that the output side 220 and the input side 210 of valve arrangement cannot communicate via any space above the upper surface of valve plate 131 while said air can flow into the channel (105) from the housing environment via a transit channel 180.

Hence, the valve arrangement 70 may be such that in operation said atmospheric pressure PA60:1 causes said valve plate 131 to rest sealingly, or substantially sealingly, on the upper valve seat 260 when the fluid pressure PF60:1 is beneath the atmospheric pressure PA60:1 such that the only communication path between the output side 220 and the input side 210 of the valve arrangement runs on that side of the valve plate 131 which faces the first valve seat 140. When the only communication path between the output side 220 and the input side 210 of the valve arrangement runs on that side of the valve plate 131 which faces the first valve seat 140, the risk for any fluid to pass from the output side 220 to the input side 210 of the valve arrangement is eliminated, or substantially eliminated, since the mouth of the transit channel 180 faces the first valve seat 140.

According to an embodiment the upper valve seat 260 is advantageously shaped and dimensioned such that the upper surface of the valve plate 131 is located outside the cross-sectional area of the channel 105 when the valve plate 131 rests on its upper valve seat 260. This advantageously allows for a substantially larger passage for air to flow in towards the fluid input side 210 of the valve arrangement 70, when the fluid pressure level $P_{F60}$ drops as discussed in connection with Figure 2 above.

**Figure 6E** is a sectioned side view of the central part 200 of the valve housing 100 of Figure 6A, illustrating the valve arrangement 70 in the closed state.

**Figure 6F** is a cross-sectional view taken along line D-D of FIG 6E.

With reference to Figure 6C it is to be understood that when the when valve arrangement 70 is provided with an **upper valve seat 260, which is shaped and dimensioned as an indentation so as to allow the upper surface of the valve plate 131 to be located outside the cross-sectional area of the channel 105, the ambient pressure $P_{A60}$ may act on the lower surface of the valve plate 131 to open a large passage for air to flow in towards the fluid input side 210 of the** valve arrangement 70, when the pressure level $P_{F60}$ drops as discussed in connection with Figure 2 above. Whereas it can be seen that in the embodiment shown in Figures 4C, 4D the valve plate 131 will be positioned substantially in the middle of the channel 105 when that valve arrangement is in its fully open state, thus still limiting the air flow 229 through the air flow passage, it can be seen in Figures 6C, 6D that the ambient pressure may move the **valve plate 131 to a position where it is entirely located in the upper 25 % of the distance from the ceiling of the channel 105 to the floor of the channel 105. Hence, the Figure 6 embodiment allows for a substantially larger passage for air to flow in towards the fluid input side 210 of the** valve arrangement 70, when the pressure level $P_{F60}$ drops as discussed in connection with Figure 2 above.

_An embodiment comprising an elevated first valve seat and an upper second valve seat_

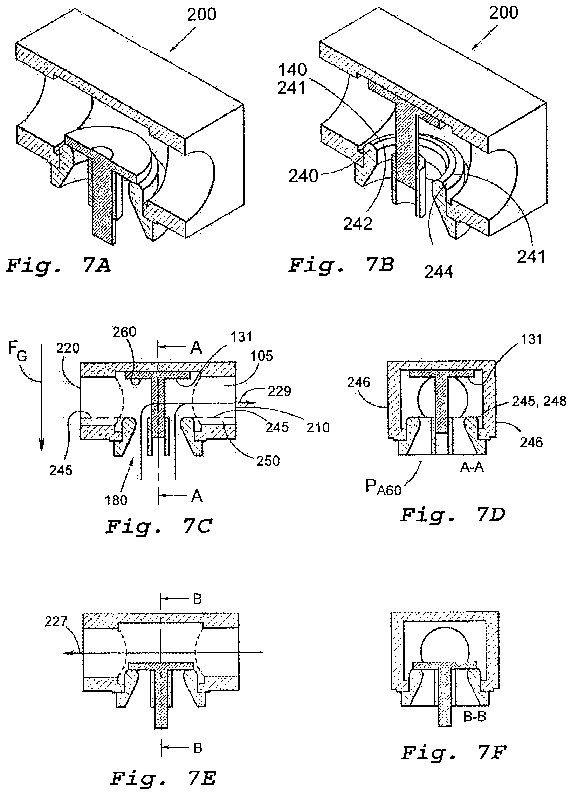

**Figures 7A and 7B** are sectional perspective side views of the central part 200 of a valve arrangement 70 that may be useful for understanding the invention.

Figure 7A illustrates the central part 200 of the valve arrangement 70 when the valve arrangement 70 is in its closed position, i.e. when the valve plate 131 rests sealingly against the elevated first valve seat 241, and Figure 7B illustrates the central part 200 of the valve arrangement 70 when the valve arrangement 70 is in an open position.

The Figure 7 embodiment of the valve arrangement 70 advantageously includes the elevated first valve seat 241, as discussed above in connection with Figures 5A - 5F. As mentioned above, the elevated first valve seat 241 may comprise the first valve seat 140 being arranged on a ridge 240 protruding from the inner surface of the housing 100 into the cross-sectional area of the channel 105, as described in connection with Figures 5A-5F. The first seat 140 may carry a Sealing means 142 (see Fig 3).

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40. Moreover, the Figure 7 embodiment of the valve arrangement 70 advantageously includes the upper valve seat 260, as described above in connection with Figures 6A-6F.

**Figure 7C** is a sectioned side view of the central part 200 of the valve housing 100 of Figure 6B, illustrating the valve unit in the open state. The direction of flow of air from the environment into the channel 105, via transit channel 180, is illustrated by arrow 229 in Figure 7C. **Figure 7D** is a cross-sectional view taken along line A-A of FIG 7C.

**Figure 7E** is a sectioned side view of the central part 200 of the valve housing 100 of Figure 7A, illustrating the valve arrangement 70 in the closed state.

**Figure 7F** is a cross-sectional view taken along line B-B of FIG 7E.

The provision of an elevated valve closure seat 241 at the bottom of the inner surface of the housing 100 allows for an amount of residual fluid to remain in the channel 105 without trickling out via transit channel 180. The volume of residual fluid is dependent on the height

of the ridge 240 and the cross sectional area of the channel 105, as can be deduced from Figure 7C in conjunction with Figure 7D. When the channel 105 has a substantially circular cross sectional area, as illustrated in Figure 7D, the volume of residual fluid is dependent on the height of the ridge 240 and the radius of the channel 105. Hence, the Figure 7 embodiment of valve arrangement 70 advantageously eliminates, or substantially reduces the risk for leakage of fluid, not only when the valve plate 131 rests against the elevated first valve seat 241, but also when the valve plate 131 is in the position shown in Figure 7B and 7C, since the ridge 240 co-operates with the air streaming in through transit channel 180 such that the streaming air 229 reduces the risk of residual fluid 245 trickling out via transit channel 180 when the valve unit is in its open position. Any residual fluid in the channel 105 of the housing portion 200 will tend to remain on the bottom 250 of channel 105 due to the force of gravity $F_G$ co-operating with the flow of air from transit channel 180 which will keep residual fluid 245 from flowing over the ridge 240 when the valve arrangement 70 is mounted as illustrated in Figure 5C, such that the force of gravity $F_G$ acts in the direction parallel to the length of shaft 150.

The elevated valve seat 241 co-operates with the inner wall of the bore 122 so as to form a channel 246 (See Figure 5D and 7D).

Accordingly, the valve arrangement 70 may include **a valve housing** 100 having:

**an input** 210 for connection to a fluid supply piping system 35, 72 having a fluid pressure $P_{F60:1}$;

**an output** 220 for connection to a fluid outfeed conduit 74, 40; and

**a housing body** 100, 200, 130 positioned between the input 210 and the output 220, said housing body having

**a channel 105** for connecting the input 210 with the output 220; and

**a valve unit 130** which, in operation, has a closed state or an open state dependent on a pressure difference $\Delta P$ between the fluid pressure PF60:1 and said ambient pressure PA60:1, the valve unit 130 having a movable valve plate 131 and a transit channel 180, wherein

the valve plate 131 is adapted to rest sealingly against a first valve seat 140, provided at the bottom of the inner surface of the housing body 100, such that fluid is prevented from leaving the channel 105 when the valve unit 130 is in the closed state, and wherein
the valve arrangement 70 is such that, when the fluid pressure PF60:1 is beneath the atmospheric air pressure PA60:1 and said pressure difference $\Delta P$ exceeds a threshold value, said pressure difference $\Delta P$ causes

said valve plate 131 to rest on an upper valve seat 260 such that the output side 220 and the input side 210 of valve arrangement cannot communicate via any space above the upper surface of valve plate 131 while

allowing air flow into the channel (105) from the housing environment via said transit channel 180 below the valve plate 131; and wherein

the first valve seat 140 is elevated from the bottom of the inner surface of the housing 100 so as to form an elevated valve seat 241 adapted to allow an amount of residual fluid 245 to remain on the bottom of the inner surface of the housing 100 while preventing such residual fluid 245 from leaving the channel 105 via the transit channel 180 when the valve unit 130 is in the open state. The threshold value, as mentioned in this document, may correspond to the pressure difference required to lift the movable valve plate 131 by overcoming the force of its weight, i.e. $F_{lift} = m_{131} * g$, where $m_{131}$ is the mass of the movable valve plate 131, and g is the acceleration of gravity constant.

According to an embodiment, the elevated valve seat 241 co-operates with the inner wall of the bore 122 so as to form a channel 246 (See Figure 7D) at the bottom of the inner surface of the housing body 100 such that an amount of residual fluid 245 may flow passed the transit channel 180 while preventing such residual fluid 245 from leaving the channel 105 via the transit channel 180.

An embodiment comprising an elevated first valve seat and an elevated second valve seat

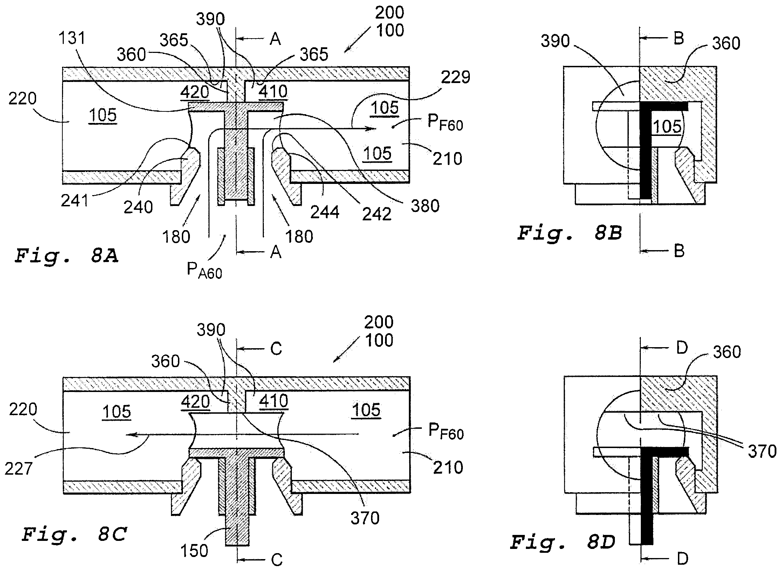

**Figures 8A, 8B, 8C and 8D** are illustrations of yet another embodiment of the central part 200 of the valve arrangement 70.

**Figure 8A** is a sectioned side view of the central part 200 of the valve housing 100, illustrating the valve unit in the open state. The direction of flow of air from the environment into the channel 105, via transit channel 180, is illustrated by arrow 229 in Figure 8A.

**Figure 8B** is a partially sectioned view taken along line A-A of FIG 8A.

**Figure 8C** is a sectioned side view of the central part 200 of the valve housing 100, illustrating the valve arrangement 70 in the closed state.

**Figure 8D** is a partially sectioned view taken along line C-C of FIG 8C. As mentioned above, the central part 200 of the valve housing 100 may be symmetrical with respect to line D-D in Figure 8D.

The valve arrangement 70 according to the embodiment illustrated in Figures 8A, 8B, 8C and 8D comprises the elevated first valve seat 241, as described above in this document. Hence, the first valve seat 140 is elevated from the bottom of the inner surface of the housing 100 so as to form an elevated valve seat 241 adapted to allow an amount of residual fluid 245 to remain on the bottom 250 of the inner surface of the housing 100 while preventing such residual fluid 245 from leaving the channel 105 via the transit channel 180 when the valve unit 130 is in the open state. Hence, the Figure 8 embodiment of valve arrangement 70 advantageously eliminates, or substantially reduces leakage of fluid, not only when the valve unit is in the closed position, but also when the valve unit is in the open position.

Moreover, the Figure 8 embodiment of the valve arrangement 70 includes an upper ridge member 360. The valve plate 131 can rest against the upper ridge member 360 in the open state of the valve unit, as illustrated by figures 8A and 8B. The upper ridge member 360 has a surface 370 (See Fig 8C) adapted to meet with a part of the upper surface of the valve plate 131 in the open state of the valve arrangement 70.

With reference to Figure 8A, the upper ridge member 360 may be shaped and dimensioned to protrude from the inner surface 365 of the housing 100 and to stretch across the breadth of the channel 105 (see Figure 8B). In this connection it is noted that the central part 200 of the valve housing 100 may be symmetrical with respect to line B-B in Figure 8B.

Whereas arrow 227 (See Fig 8C) indicates the direction of fluid flow 227 when valve arrangement 70 is in the closed position, the upper ridge member 360 extends in a direction perpendicular to the direction of fluid flow 227 so as to separate the upper portion 390 of channel 105 into an output side upper portion 420, and an input side upper portion 410 (See Figure 8A). The upper portion 390 is the space 390 between the upper surface of the valve member 131 and the inner surface 365 of the housing 100 when the valve is in its open state so that the valve member 131 rests against the surface 370 of ridge member 360. Hence, the volume of the space 390 depends on the extent of protrusion, i.e. the height of the ridge member 360 and the surface area of the upper surface of the valve member 131.

The upper ridge member 360 is shaped and dimensioned such that when the valve plate 131 rests against the upper ridge member 360, then the input side 210 and output side 220 of channel 105 can communicate only via the space 380 below the valve plate 131 (See Fig 8A). In other words, the upper ridge member 360 may function as a protruding upper valve seat 360 such that the valve plate 131 can rest against the protruding upper valve seat 360 so as to isolate the upper portion 420 of channel 105 on the output side 220 from the upper portion 410 of channel 105 on the input side 210. This advantageous effect is achieved since the valve arrangement 70 opens in dependence on the fluid pressure $P_{F60}$ in the channel 105 becoming lower than the ambient pressure $P_{A60}$ on the outside of valve arrangement 70, as discussed above e.g. in connection with Figure 2. Hence, when the ambient air pressure $P_{A60}$ causes the valve plate 131 to rest against the protruding upper valve seat 360, there will no longer be any unbroken fluid connection between the output side 220 and the input side 210 of channel 105. This is because the space 380 below the valve plate 131 (See Fig 8A) will be filled with air when the valve arrangement is in the open state, and because the upper ridge member 360 is shaped and dimensioned such that it co-operates with the valve plate 131 to close the upper portion 390 of channel 105. In this connection, the upper portion of channel 105 is the space 390 above the valve plate 131 (See Fig 8A) when the valve plate 131 rests against the protruding upper valve seat 360.

Hence, the Figure 8 embodiment of the valve arrangement 70 includes an upper ridge member 360 which co-operates with the movable valve member 131 to separate the upper space 410 of the input side 210 from the upper space 420 of the output side 220 when the fluid pressure $P_{F60}$ becomes lower than the ambient pressure $P_{A60}$ on the outside of valve arrangement 70.

Hence, in response to the fluid pressure $P_{F60}$ becoming lower than the ambient pressure $P_{A60}$, the movable valve member 131 co-operates with the upper ridge member 360 to divide the upper portion 390 of channel 105 into a first space 410 and a second space 420 such that fluid is prevented from flowing from the second space 420 to the first space 410. Fluid is prevented from flowing from the second space 420 to the first space 410, because the movable valve member 131 will rest on the ridge member 360, as illustrated in Figures 8A and 8B. According to an embodiment, the movable valve member 131 will rest sealingly on the ridge member 360, when the valve unit 130 is in the open state and the pressure level PF60:1 at the input side 210 is beneath the ambient atmospheric air pressure PA60:1 so that the resulting pressure difference $\Delta P$ exceeds a threshold value. Moreover, fluid is prevented from flowing from the second space 420 to the first space 410, because the space 380 below the valve plate 131 (See Fig 8A) will be filled with air streaming in via transit channel 180, when the pressure level PF60:1 at the input side 210 becomes lower than the ambient pressure $P_{A60}$.

According to the Figure 8 embodiment, the upper ridge member 360 is arranged substantially above the centre of the movable valve member 131.

An embodiment of, the valve arrangement 70 may include **a valve housing** 100 having:

    **an input** 210 for connection to a fluid supply piping system 35, 72 having a fluid pressure $P_{F60:1}$;

    **an output** 220 for connection to a fluid outfeed conduit 74, 40; and

    **a housing body** 100, 200, 130 positioned between the input 210 and the output 220, said housing body having

**a channel 105** for connecting the input 210 with the output 220; and

**a valve unit 130** which, in operation, has a closed state or an open state dependent on a pressure difference ΔP between the pressure level PF60:1 in the channel 105 and said ambient pressure PA60:1, the valve unit 130 having a movable valve plate 131 and a transit channel 180, wherein

the valve plate 131 is adapted to rest against a first valve seat 241, provided at the bottom of the inner surface of the housing body 100, such that fluid is prevented from leaving the channel 105 when the valve unit 130 is in the closed state, and wherein

the valve arrangement 70 is such that, when the fluid pressure PF60:1 is beneath the atmospheric air pressure PA60:1 and said pressure difference ΔP exceeds a threshold value, said pressure difference ΔP causes

said valve plate 131 to rest on an upper valve seat 260 such that the output side 220 and the input side 210 of valve arrangement cannot communicate via any space above the upper surface of valve plate 131 while

allowing air flow into the channel (105) from the housing environment via said transit channel 180 below the valve plate 131; and wherein

the upper valve seat 260 includes an upper ridge member 360 which is shaped and dimensioned to protrude from the inner surface 365 of the housing 100 such that when the valve plate 131 rests against the upper ridge member 360, the upper ridge member 360 co-operates with the valve plate 131 and the inner surface 365 of the housing 100 to form a cavity 410 on the input side 210 of the upper ridge member 360.

When the fluid pressure PF60:1 is beneath the atmospheric air pressure PA60:1 and said pressure difference ΔP exceeds a threshold value, said pressure difference ΔP causes air to stream in the direction of arrow 229 (See Fig 8A) through the transit channel 180 into channel 105 and towards the input 210. This stream 229 of flowing air causes a suction of fluid and/or air from the cavity 410 on the input side 210 of the upper ridge member 360 so that the pressure level in the cavity 410 becomes equal to or even lower than the pressure level in other parts of channel 105. This advantageously leads to an increased force acting on the valve plate 131 in the direction towards the upper ridge member 360, since the force acting on the valve plate 131 depends on the difference between the pressure on the lower side of valve plate 131 and the pressure on the upper surface of valve plate 131.

**With reference to figure 8, there is advantageously provided an upper valve seat 370 which is shaped and dimensioned such that, in the open state of the valve unit, the upper valve seat 370 co-operates with the valve member 131 and a portion of the inner surface 365 of the housing 100 to form a cavity 410 such that the cavity 410 is open towards the input 410 of the valve arrangement 70.**

The upper ridge member 360 has a surface 370 (See Fig 8C) adapted to meet with a part of the upper surface of the valve plate 131 in the open state of the valve arrangement 70.

According to an embodiment, the first valve seat 140 is elevated from the bottom of the inner surface of the housing 100 so as to form an elevated valve seat 241 adapted to allow an amount of residual fluid 245 to remain on the bottom of the inner surface of the housing 100 while preventing such residual fluid 245 from leaving the channel 105 via the transit channel 180 when the valve unit 130 is in the open state.

According to another embodiment, the first valve seat 140 is substantially flush with the bottom of the inner surface of the housing 100 while the upper valve seat 260 includes an upper ridge member 360 as described above.

Another embodiment with an upper ridge member

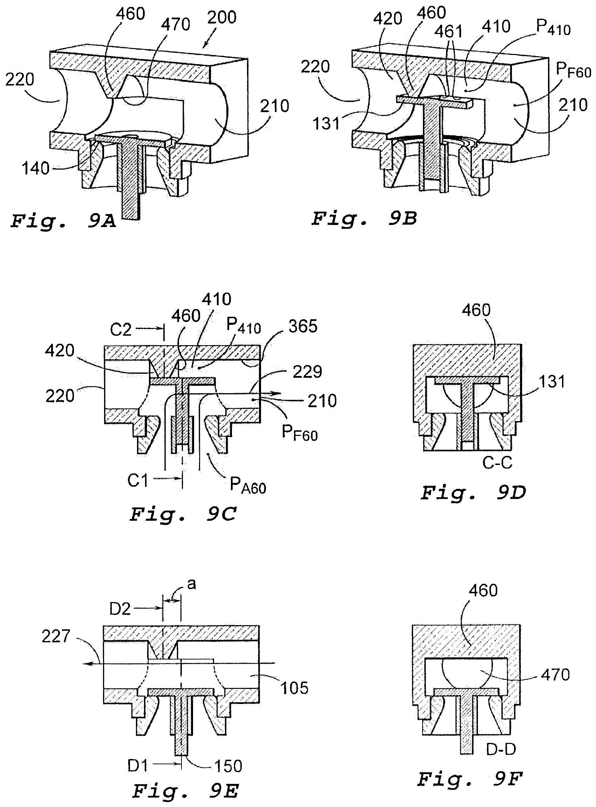

**Figures 9A and 9B** are sectional perspective side views of yet another embodiment of the central part 200 of the valve arrangement 70 (See Figures 9A and 9B in conjunction with Figure 3).

Figure 9A illustrates the central part 200 of the valve arrangement 70 when the valve arrangement 70 is in its closed position, i.e. when the valve plate 131 rests sealingly against the first valve seat 140, and Figure 9B illustrates the central part 200 of the valve arrangement 70 when the valve arrangement 70 is in an open position.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

**Figure 9C** is a sectioned side view of the central part 200 of the valve housing 100 of Figure 9B, illustrating the valve unit in the open state. The direction of flow of air from the environment into the channel 105, via transit channel 180, is illustrated by arrow 229 in Figure 9C. **Figure 9D** is a cross-sectional view taken along line C1-C2 of FIG 9C.

**Figure 9E** is a sectioned side view of the central part 200 of the valve housing 100 of Figure 9A, illustrating the valve arrangement 70 in the closed state. Arrow 227 indicates the direction of flow of the fluid through channel 105 when the valve unit 130 is in the closed state (See Fig 9E) and when the tap 45 (See Figure 1) is in an open state.

**Figure 9F** is a cross-sectional view taken along line D-D of FIG 9E.

The figure 9 embodiment of the valve arrangement 70 includes an upper ridge member 460, whereas the first valve seat 140 is as described in connection with Figures 4A-4F above. The upper ridge member 460 is similar to the upper ridge member 360, as described above in connection with Figure 8, but upper ridge member 460 is positioned differently in relation to the valve member 131.

In response to the fluid pressure $P_{F60}$ in channel 105 becoming lower than the ambient pressure $P_{A60}$, the movable valve member 131 co-operates with the upper ridge member 460 to divide the upper portion 390 of channel 105 into a first space 410 and a second space 420 such that fluid is prevented from flowing from the second space 420 to the first space 410 (See Fig. 9C). Fluid is prevented from flowing from the second space 420 to the first space 410, because the space 380 below the valve plate 131 (See Fig 8A) will be filled with air, when the fluid pressure $P_{F60}$ becomes lower than the ambient pressure $P_{A60}$. As discussed in connection with Figure 2 above, the pressure $P_{F60}$ depends on the pressure $P_{35:1}$, and when the fluid pressure $P_{35:1}$ suddenly falls, the valve member 131 will move toward the fully open position and there will be a stream 229 of air flowing in via transit channel 180 towards input 210 and piping system 35 (See Fig 9C in conjunction with Fig 2).

In this connection it is noted that the force acting to lift the valve plate 131 depends on the pressure difference $\Delta P$ between the lower and upper surfaces of valve plate 131. The force acting to lift the valve plate 131 also depends on the respective areas of the lower and upper surfaces of valve plate 131.

Moreover, it is noted that according to the Figure 9 embodiment, the upper ridge member 460 is positioned at a distance a downstream, in the direction 227 of fluid flow, from the centre of shaft 150 (See Fig 9E). The centre of shaft 150 is indicated by line D1 in Figure 9E, and line D2 indicates the centre of upper ridge member 460, as seen in Figure 9E. This positioning of the upper ridge member 460 at a position off-centre and downstream in relation to the centre of valve plate 131 renders space 410 to be larger than space 420, when the ambient air pressure $P_{A60}$ causes air to flow 229 in via transit channel 180 (See Fig 9C and Fig.9A). Experiments indicate the Figure 9 embodiment to prove even better performance than the Figure 8 embodiment. For example, tests indicate that the valve member 131 in the figure 9 embodiment moves faster from the closed position (figure 9A) to the open position (figure 9B) in response to a certain pressure difference.

This may be explained by the relatively large portion of the upper surface of plate 131 facing the space 410 which is on the input side 210, which may cause a stronger force directed to pushing the valve member 131 towards the open position shown in Figure 9B. When the valve member 131 approaches the position shown in Figure 9B it will also gradually strangle any flow that occurs in the space between the valve member 131 and ridge member 460 in the direction from output 220 towards input 210. Accordingly, the provision of the ridge member 460 at a position which is off-center in relation to the centre of shaft 150 (See Fig 9E) such that space 410 is larger than space 420 may co-operate with the sub-pressure originating from input side 410 to cause a stronger force directed to pushing the valve member 131 towards the ridge member 460.

This may be explained by the fact that when air streams 229 into the through channel 105, as illustrated in Figure 9C, the flow 229 of air will cause suction of fluid and air from the space 410. Hence, when plate 131 rests sealingly against the seat surface 461 of upper ridge member 460, the pressure $P_{410}$ in space 410, may become even lower than the pressure $P_{35:1}$, due to the suction of fluid and air from the closed space 410. This reduced pressure $P_{410}$ in combination with the relatively large portion of the upper surface of plate 131 facing the space 410 interact to cause a large force directed to keeping the plate 131 in the open position, as long as air keeps flowing in.

When the fluid pressure is re-established, on the other hand, the relatively large portion of the upper surface of plate 131 facing the space 410, which is the fluid input side 210 of the valve arrangement 70, will interact with the upper ridge member 460 to cause a large force directed to moving the plate 131 to the closed position.

Hence, the positioning of upper ridge member 460 at a position off-centre and downstream, in relation to the flow of fluid under normal conditions, renders improved performance of the valve arrangement 70.

The upper ridge member 460 has a surface 470 (See Fig 9A) adapted to meet with a part of the upper surface of the valve plate 131 in the open state of the valve arrangement 70, as shown in Figure 9B. With reference to Figure 9C, the ridge member 460 may be shaped and dimensioned to protrude from the inner surface 365 of the housing 100, 200 and to stretch across the breadth of the channel 105 (see also Figure 8B).

An embodiment comprising an elevated first valve seat and an upper ridge member

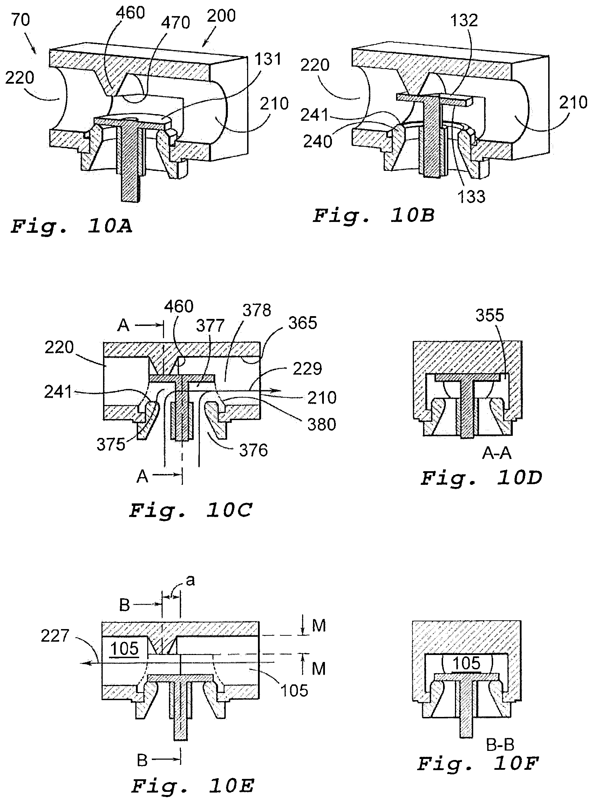

**Figures 10A and 10B** are sectional perspective side views of yet another embodiment of the central part 200 of the valve arrangement 70.

Figure 10A illustrates the central part 200 of the valve arrangement 70 when the valve arrangement 70 is in its closed position, i.e. when the valve plate 131 rests sealingly against the elevated first seat 241, and Figure 10B illustrates the central part 200 of the valve arrangement 70 when the valve arrangement 70 is in an open position. The Figure 10 embodiment of the valve arrangement 70 advantageously includes the upper ridge member, as described in connection with Figures 9A-9F.

The valve arrangement 70 is adapted to assume the open position in response to a decreased fluid pressure $P_{F60:1}$, as discussed above, such that air can flow into the channel 105 from the housing environment so as to prevent reflux of fluid from said fluid outfeed conduit 74, 40.

The figure 10 embodiment of the valve arrangement 70 advantageously includes the upper ridge member 460 as described in connection with Figures 9A-9F above.

Moreover, the figure 10 embodiment of the valve arrangement 70 comprises the elevated first valve seat 241, as described above in this document e.g. in connection with Figures 5, 7 and 8. Hence, the Figure 10 embodiment of valve arrangement 70 advantageously eliminates, or substantially reduces leakage of fluid, not only when the valve unit is in the closed position, but also when the valve unit is in the open position.

The positioning of upper ridge member 460 at a position off-centre and downstream, in relation to the flow of fluid under normal conditions, renders improved performance of the valve arrangement 70.

When the fluid pressure is re-established, on the other hand, the relatively large portion of the upper surface of plate 131 facing the space 410, which is the fluid input side 210 of the valve arrangement 70, will interact with the upper ridge member 460 to cause a large force directed to moving the plate 131 to the closed position.

Hence, the positioning of upper ridge member 460 at a position off-centre and downstream, in relation to the flow of fluid under normal conditions, renders improved performance of the valve arrangement 70.

There are two main criteria that have to be considered for reflux preventing valves. The first criterion is to obtain at least a minimum flow of fluid during a specified pressure drop over the valve during normal condition when the valve is open. For instance the minimum permitted flow of fluid can be 0,35 litres at a pressure drop of 0,15 bar over the valve. The second criteria is that a specified sub-pressure in the fluid distribution piping system on the input side of the valve only results in a specified re-suction pressure on the output side of the valve. For instance a re-suction pressure of Z2 mm water column can be permitted on the output side of the valve, when the valve is exposed to an under pressure of Z1 mm water column on the input side of the valve (see Figure 2).

As an example, the second criterion means that a sub-pressure $P_{F60:1}$ equivalent to e.g. Z1 mm water column on the supply piping side 35 of the valve arrangement would result in a water column of Z2 mm being re-sucked in the outfeed conduit 40. The heights Z1 and Z2 are depicted in Figure 2. The height Z1 is this example the height of the piping section 35. The height Z2 is the height of the water column being sucked up in the piping section 40 from the fluid surface 90. A large outflow of fluid at point 80 has as effect that no pressure from the fluid source tank 20 presses the fluid in piping section 35 upwards. Therefore the fluid in the piping section 35 will flow downwards due to its own weight. When the fluid flows downwards in piping section 35 a sub-pressure $P_{F60:1}$ arises in piping section 60 which leads to the siphoning effect, which wants to suck up fluid in piping section 40 from the fluid reservoir 92. This sub-pressure $P_{F60:1}$ in piping section 60 is proportional to the height Z1 in pipe section 60. The higher the height Z1 is, the more fluid is sucked up in the piping section 40 and the higher will Z2 be. Hence the second criterion for reflux preventing valves is to minimize the amount of fluid being sucked up in pipe section 40, given a certain height Z1. This can also be expressed as minimizing the height Z2, given a certain height Z1. When designing a valve either of the first and the second criterion or both the first and the second criterion have to be considered.

Position of upper ridge member

Tests have shown that the position of the upper ridge member 460 has impact on the flow of fluid. If the distance a is too large when the valve unit 130 is in the closed state, the upper ridge member 460 comes too close to the output 220 and partly blocks the output 220 and restricts the flow of fluid through the valve arrangement which is not desirable. It the distance a is shorter and the upper ridge member 460 is positioned closer to the centre of the valve plate, the fluid can flow unrestricted from the input 210, into the space inside the bore 122, continue under the upper ridge member 460 and arrive in the space inside the bore 122 on the other side of the upper ridge member 460 before entering the output 220.

The position of the ridge member 460 has also impact on the performance of the valve. As said before in the application tests indicate that by positioning the ridge member 460 so that a is large the valve member 131 moves faster from the closed position (figure 9A) to the open position (figure 9B) in response to a certain pressure difference. This phenomenon is explained earlier in the application.

The ridge member 460 according to this embodiment only separates the cavity 410 from cavity 420 when the valve member 131 extends across at least the breadth of the channel 105. If the valve member 131 has an extension which is smaller than the breadth of the channel 105, fluid would be able to pass on the sides of the valve member 131 from the cavity 420 to the cavity 410 when the valve unit 130 is in the open state.

If the minimum pressure level $P_{F60:1}$ during normal condition in the pipe section 60 is low there is a risk that the valve opens up spontaneously and that fluid leaks out. This is due to the fact the pressure level $P_{F60:1}$ fluctuates and temporarily can be lower than the atmospheric pressure level $P_{A60:1}$. In this case it can happen that the weight of the valve member 131 cannot compensate for the pressure difference and the valve unit 130 opens up. By positioning the ridge member 460 asymmetrically and letting the distance a be larger, this problem can be solved.

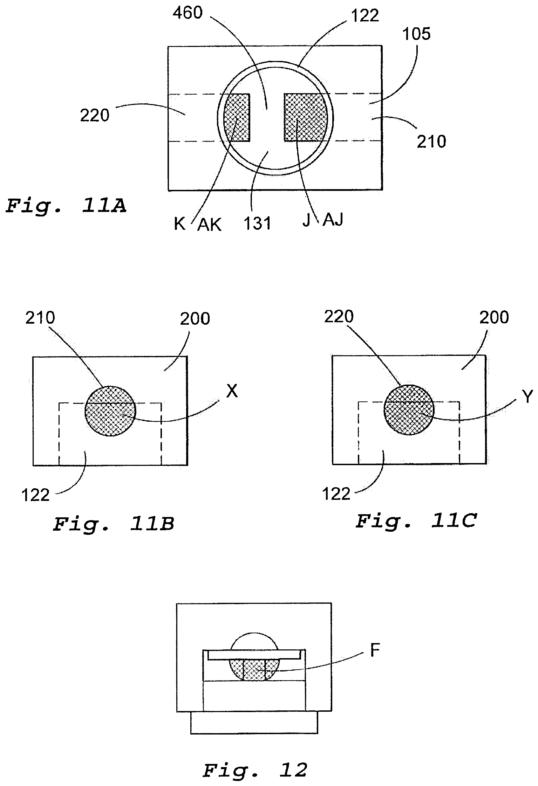

The valve member 131 has an upper valve member surface 132 facing the channel 105 and the ridge member 460, and a lower member surface 133 facing the valve seat 241 (see figure 10B). Figure 11A shows the valve housing 200 seen from below and figure 11B shows the valve housing seen from the input side. The input surface area AJ is the area of an input portion J of the upper valve member surface 132 that faces the cavity 410 and the output surface area AK is the area of an output portion K of the upper valve member surface 132 that faces the cavity 420, when the valve unit 130 is in the open position. The area AJ can e.g. be 90 mm$^2$ and the area AK can e.g. be 18 mm$^2$. During normal condition, when the valve unit 130 is in the closed position, the pressure in the channel 105 facing the input 210 will be higher than the pressure in the channel 105 facing the output 220. This is due to the fact that the ridge member 460 partly stops the flow of fluid flowing from the input 210 to the output 220. By making the input surface area AJ larger than the output surface area AK, the pressure in the channel 105 on the input side of the ridge member 460 acts on a larger area of the valve member 131 than the pressure in the channel 105 on the output side of the ridge member 460, which results in that the force that acts on the valve member 131 in order to close the valve member 131 will be larger.

The input cross section area X is the cross section area of the input 210 (see Figure 11B) and the output cross section area Y is the cross section area of the output 220 (see Figure 11C). Tests have verified that an optimal position of the upper ridge member 460 is achieved when the following conditions are fulfilled:

1. the output surface area AK is larger than the smaller of the input cross section area X of the input 210 and the output cross section area Y of the output 220.

2. the input surface area AJ is larger than the output surface area AK.

The first condition makes sure that the fluid flow criterion is satisfied, since it prevents the distance a from getting too large. The second condition makes sure that the valve member 131 moves faster from the closed position to the open position in response to a certain pressure difference and that the valve member 131 doesn't open at low pressures.

Tests have also shown that the height of the upper ridge member has impact on the performance of the valve arrangement 70. If the height M of the upper ridge member 460 as shown in figure 10E is large, the flow of fluid will be restricted by the upper ridge member 460 when the valve unit 130 is closed. Consequently the height M cannot be arbitrary large.

The height of the upper ridge member.

The height M of the upper ridge member 460 has also impact on the capacity to prevent re-suction on the output side of the valve arrangement 70. As described under Figure 3 a bush 170 is fixed and connected sealingly to the wall of the bore 122 so that the bush 170 will have a transit channel 180. This bush 170 can also be an integrated part of the housing 200, in which case the bore 122 forms the transit channel 180. When the valve unit 130 is in the second state and the valve member 131 rests against the ridge member 460 a second fluid passage 375 is created for air flowing from the outer environment into the fluid outfeed conduit (74, 40). The second fluid passage 375 comprises a first passage part 376 in a part of the bore 122 which is not intersected by the channel 105, a third passage part 378 in a part of the channel 105 which part is not intersected by the bore 122, and a second passage part 377 between the first passage part 376 and the third passage part 378 in the part of the channel 105 which is intersected by the bore 122 (see Figure 10C).

The first passage part 376 has a direction which is parallel to the direction of the bore 122. The third passage 378 has a direction which is parallel to the direction of the channel 105. The cross section area of the third passage part 378 is equal to the input cross section area X.

When the valve unit 130 is in the open state, air flows from the outer environment into the first passage part 376. The air flow then deflects in the second passage part 377, continues through the third passage part 378 on the input side of the channel 105 and arrives in the fluid outfeed conduit (74, 40). When the air flows from the second passage part 377 into the third passage part 378, the valve member 131 restricts the flow of air from the second passage part 377 into the third passage part 378. The anti-siphoning inlet 380 is the opening through which air can flow from the second passage part 377 into the third passage part 378 on the input 210 side of the channel 105 when the valve unit 130 is in the open state (see Figure 10C). In this embodiment the valve member 131 restricts the upper part of the anti-siphoning inlet 380. If the height M of the upper ridge member 460 is large, the valve member 131 will restrict the anti-siphoning inlet 380 even more. This is best seen in Figure 12. The anti-siphoning inlet area F is the area of the anti-siphoning inlet 380. The anti-siphoning inlet area F is restricted by an edge of the second valve member surface 133 and by an inner wall of the input 210. If the height M of the upper ridge member 460 is large, the anti-siphoning inlet area F will be small and vice versa.

Generally the performance of the valve arrangement increases when the anti-siphoning inlet area F decreases. The smaller the anti-siphoning inlet area F is, the less is the reflux of fluid due to the pressure drop in the fluid distribution piping system. This is due to the fact that the speed of the air flowing out through the anti-siphoning inlet 380 increases when the anti-siphoning inlet area F is small.

The intense flow of air sweeps out air from the cavity 410. This decreases the pressure in the cavity 410, which sucks the valve member 131 even harder towards the upper ridge member 460. Hence, the performance of the valve arrangement 70 increases when the height M increases.

If the anti-siphoning inlet area F is set to 0, i.e. the height M of the upper ridge member 460 is large, no air from the outer environment can be sucked into the supply piping system 35. There will always be a small play 355 between the valve member 131 and the bore 122 (see figure 10D) so that the valve member 131 can move freely within the bore 122. This play 355 has the effect that the sub-pressure on the input 210 side continues over to the output 220 side, which leads to a re-suction of the fluid in the output 220 side and the valve arrangement 70 would not work. Therefore the anti-siphoning inlet area F must be larger than zero, so that air can enter.

A large anti-siphoning inlet area F in combination with a large transit channel 180 lead to a considerable air flow into the supply piping system 35 when the valve unit 130 is in the open position. Thus the sub-pressure in the supply piping system 35 will increase, which prevents re-suction in other installations in this part of the piping system.

G1 is the smallest cross section area of the first passage part 376 and G2 is the smallest cross section area of the second passage part 377. An area relation K1 is the ratio between the smaller of the limiting first passage cross section area G2 and the limiting second passage cross section area G1, and the anti-siphoning inlet area F. This can be expressed as:

$$K1 = G1/F \text{ when } G2 > G1 \text{ and } K2 = G2/F \text{ when } G1 > G2. \qquad (i)$$

Tests have proven that an optimal performance is obtained when the following two conditions are fulfilled:

3. The area relation K1 > 2.
4. The anti-siphoning inlet area F > 0.

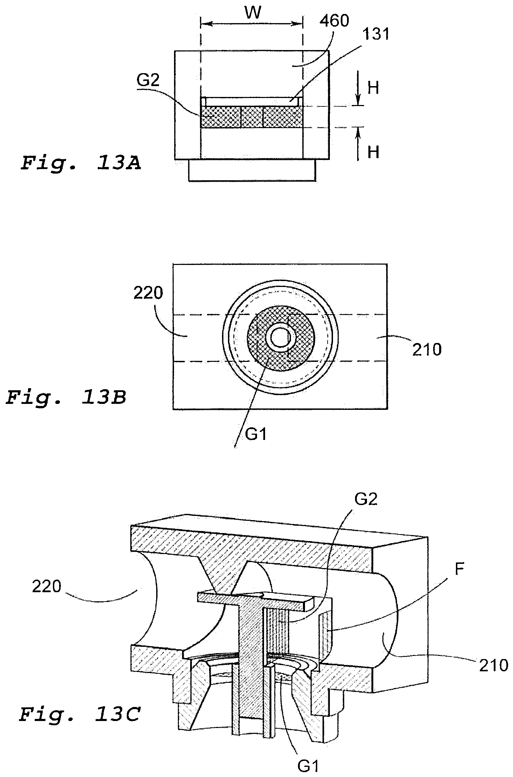

In this embodiment the limiting first passage cross section area G1 is the smallest horizontal cross section area of the transit channel 180 minus a cross section area of the central shaft 150 (See Figure 13B and 13C). The limiting second passage cross section area G2 is defined by H * W where W is the width of the bore 122 and H is the distance between the valve seat 241 and the lower surface 133 of the valve member 131 when the valve unit 130 is in the second state (see Figure 13A and 13C). The limiting second passage cross section area G2 will be larger than the limiting first passage cross section area G1 when H is large and the limiting first passage cross section area G1 will be larger than the limiting second passage cross section area G2 when H is small. Consequently, the expression (i) can be re-written as:

$$K1 = G1/F \text{ when } H \text{ is large and } K1 = G2/F \text{ when } H \text{ is small.}$$

H is small when the height M of the upper ridge member 460 is large and H is large when the height M of the upper ridge member 460 is low.

The tests have revealed that a valve arrangement according to this embodiment, which fulfils the conditions 1-4 here above, generate a re-suction pressure less than 200 mm water column on the output side of the valve, when the valve is exposed to an under pressure of 5000 mm water column on the input side of the valve. A fluid flow of 0,35 litres at a pressure drop of 0,15 bar over the valve is also obtained for a DN 15 valve having an inner diameter of about 12-16 mm. Tests on valves similar to the one illustrated in figure 3 shows that a re-suction pressure on the output side of the valve reaches 1200 mm water column, when the valve is exposed to an under pressure of 5000 mm water column on the input side of the valve. Hence the performance is substantially improved.

The present invention is not limited to the shown embodiments. It is not necessary to provide the valve member 131 with a central shaft 150 extending downwards. The shaft could e.g. be directed upwards instead. The shaft can be omitted or other guiding possibilities are possible, e.g. guiding in the wall of the bore 122. The movement of the valve member 131 could be actuated by other means, like e.g. a spring.

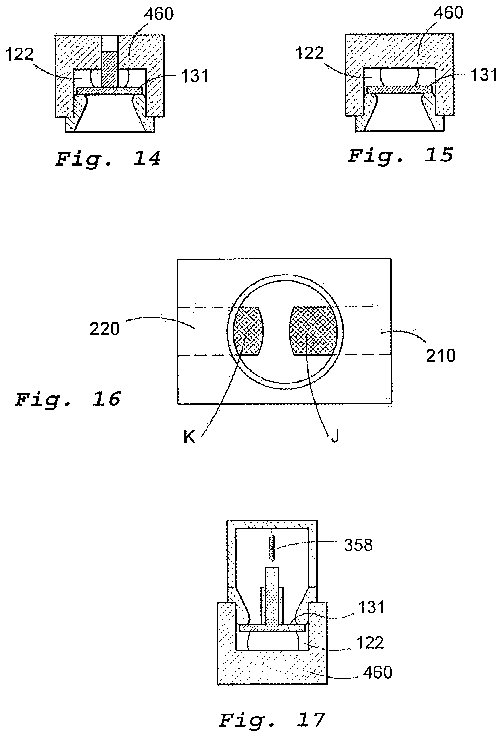

The valve member 131 according to the described embodiments is forced upwards by the pressure below the valve member 131 and it is pressed downwards by the pressure above the valve plate 131 and by the weight of the valve member 131. Figure 14 shows the principles of an embodiment with the central shaft pointing upwards. The valve member 131 according to this embodiment is forced upwards by the pressure below the valve plate 131 and it is pressed downwards by the pressure above the valve plate 131 and by the weight of the valve member 131.

Figure 15 shows the principles of an embodiment without any central shaft. The valve member 131 according to this embodiment is forced upwards by the pressure below the valve plate 131 and it is pressed downwards by the pressure above the valve plate 131 and by the weight of the valve member 131.

The form of the upper ridge member 460 can vary depending on the manufacturing procedure. In figures 10A and 10B the sidewalls of the upper ridge member 460 are bent inwards. However, the sidewalls of the upper ridge member 460 can be vertical as in figures 8A and 8C. The sides can also be curved like in figure 16.

In the shown embodiments the form of the cross section of the channel 105 and of the bore 122 is circular. Principally the cross section of the channel 105 and the bore 122 can have any form such as e.g. square.

In the shown embodiments the form of the valve member 131 is circular. Principally the valve member 131 can have any form such as e.g. square.

The bore 122 does not have to extend from the *lower* outer surface of the housing 100 to the channel 105. Principally the bore 122 can extend from the *upper* outer surface of the housing 100 or from the *side* of the housing 100 to the channel 105. Figure 17 shows schematically the bore extending from the upper outer surface of the housing 100 to the channel 105. The valve member 131 according to this embodiment is forced upwards to the closed state by the pressure below the valve plate 131 and by a spring 358 and it is pressed downwards to the open state by the pressure above the valve plate 131 and by the weight of the valve member 131. As a consequence, the upper ridge member 460 doesn't have to be positioned in the upper part of the inner surface 365 of the housing 100. The ridge member must be positioned so that the valve member can rest against the ridge member 460 in the open state of the valve unit 130.

The off-centred upper ridge member 460 can be used together with an elevated first seat valve 241 or together with a lower first seat valve 140.

**Claims**

1. A valve device (70) for mounting in an environment having a first ambient pressure level ($P_{A60:1}$), the valve device comprising:

   a valve housing (100, 200) having

   an input (210) for connection to a fluid supply piping system (35, 72) having a second pressure level ($P_{F60:1}$);
   an output (220) for connection to a fluid outfeed conduit (74, 40, 40:1); and
   a housing body (100, 200, 130) positioned between the input (210) and the output (220), said housing body having

   an inner surface forming a first channel (105) for connecting the input (210) with the output (220); and
   a valve unit (130) which, in operation, is capable of switching between a first state and a second state dependent on a pressure difference ($\Delta P$) between said first ambient pressure level ($P_{A60:1}$) and said second pressure level (PF60:1), the valve unit (130) having a movable valve member (131) and a transit channel (180), wherein
   the valve member (131) is adapted to rest against a first valve seat (140), provided at a bottom of the inner surface of the housing body (100), such that fluid is prevented from leaving the first channel (105) when the valve unit (130) is in the first state, and wherein

   the valve device (70) is such that, when the second pressure level (PF60:1) is beneath said first ambient pressure level (PA60:1) and said pressure difference ($\Delta P$) exceeds a threshold value, said pressure difference ($\Delta P$) causes the valve unit (130) to assume said second state such that ambient fluid, such as air, can flow into the first channel (105) from the housing environment; **characterized in that**
   the housing body comprises an upper ridge member (360, 460) provided at an upper part of the inner surface of the housing body, which upper ridge member co-operates with the movable valve member (131) to separate an upper space (410) of the input side (210) from an upper space (420) of the output side (220) when the second pressure level (PF60:1) is beneath said first ambient pressure level (PA60:1) and said pressure difference ($\Delta P$) exceeds the threshold value.

2. The valve device according to claim 1, wherein
   the upper ridge member (360, 460) is provided in the first channel (105) so as to receive the upper surface of the movable valve member (131) when the valve unit (130) is in its second state.

3. The valve device according to claim 1, wherein
an upper valve seat (260) is integrated with the upper ridge member (360, 460) such that when the movable valve member (131) rests against the upper valve seat (260) then the input (210) cannot communicate with the output (220) via any space above the upper surface of valve member (131).

4. The valve device according to any preceding claim, wherein

the first channel (105) has a direction of elongation (227) extending between the input (210) and the output (220); and
the upper ridge member (360, 460) is provided in the first channel (105) so as to receive the upper surface of the movable valve member (131) when the valve unit (130) is in its second state; and wherein
the upper ridge member (360, 460) extends in a direction perpendicular to the direction (227) of elongation of the first channel (105), said upper ridge member (360, 460) co-operating with the movable valve member (131) to form at least one cavity (410, 420) between the upper surface of the valve member (131) and the inner surface (365) of the first channel (105) when the valve unit (130) rests against the ridge member (360, 460, 370).

5. The valve device according to any preceding claim, wherein
the upper ridge member (360, 460) is shaped and dimensioned such that said upper ridge member (360, 460) co-operates with the movable valve member (131) to form a first cavity (410) facing the input side (210) of the valve housing (100, 200) and to form a second cavity (420) facing the output side (210) of the valve housing (100, 200); wherein
a first portion of the upper surface of the movable valve member (131) faces the first cavity (410), and a second portion of the upper surface of the movable valve member (131) faces the second cavity (420).

6. The valve device according to claim 5, wherein
the upper ridge member (460) is shaped and positioned in relation to the movable valve member (131) such that said first portion of the upper surface of the movable valve member (131) is larger than said second portion of the upper surface of plate (131).

7. The valve device according to claim 5 or 6, wherein
the upper ridge member (460) is positioned at a distance (a) off-centre in relation to the movable valve member (131) such that said first portion of the upper surface of the movable valve member (131) is larger than said second portion of the upper surface of the movable valve member (131).

8. The valve device according to any preceeding claim, wherein
the first valve seat (140, 241) is elevated from the bottom (250) of the inner surface of the housing (100).

9. The valve device according to any preceeding claim, wherein
the first valve seat (140) is placed on a ridge (240) protruding from the bottom (250) of the inner surface of the housing (100).

10. The valve device according to any of claims 8 or 9, wherein
the elevated valve seat (241) co-operates with said inner surface (105, 122) so as to form a canal (246) such that a limited amount of liquid can flow from the input side (210) towards the output side (220) via the canal; and wherein
the elevated valve seat (241) is adapted to prevent liquid from trickling out of the first channel (105) into said transit channel (180) when

the valve device (70) is in its second state, and
a gravitational force ($F_G$) causes the limited amount of liquid (245) to have a liquid surface (248) between the plane of the elevated valve seat (241, 140) and bottom (250) of the inner surface of the housing (100).

11. The valve device according to any preceding claim, wherein said fluid is a liquid, such as e.g. water.

12. The valve device according to any preceding claim, wherein said fluid supply piping system is a water system for supplying water of potable quality.

**13.** A tap water system (10, 35) for supplying water of potable quality, the tap water system comprising:

a water supply pipe (35, 72) provided in a building; and
a valve device (70) according to any preceding claim, connected to said water supply pipe (35, 72).

**Patentansprüche**

**1.** Ventilvorrichtung (70) zum Montieren in einer Umgebung mit einem ersten Umgebungsdruckniveau ($P_{A60:1}$), wobei die Ventilvorrichtung Folgendes umfasst:

ein Ventilgehäuse (100, 200) mit
einem Eingang (210) zum Verbinden mit einem Fluidzufuhrrohrleitungssystem (35, 72) mit einem zweiten Druckniveau ($P_{F60:1}$);
einem Ausgang (220) zum Verbinden mit einer Fluidauslassleitung (74, 40, 40:1); und
einem Gehäusekörper (100, 200, 130), der zwischen dem Eingang (210) und dem Ausgang (220) positioniert ist, wobei der Gehäusekörper
eine Innenoberfläche, die einen ersten Kanal (105) zum Verbinden des Eingangs (210) mit dem Ausgang (220) bildet, aufweist; und
eine Ventileinheit (130), die, im Betrieb, abhängig von einer Druckdifferenz ($\Delta P$) zwischen dem ersten Umgebungsdruckniveau ($P_{A60:1}$) und dem zweiten Druckniveau ($P_{F60:1}$) in der Lage ist, zwischen einem ersten Zustand und einem zweiten Zustand zu schalten, wobei die Ventileinheit (130) ein bewegliches Ventilelement (131) und einen Durchgangskanal (180) aufweist, wobei
das Ventilelement (131) angepasst ist, um gegen einen ersten Ventilsitz (140) anzuliegen, der an einem Boden der Innenoberfläche des Gehäusekörpers (100) bereitgestellt ist, sodass verhindert wird, dass Fluid den ersten Kanal (105) verlässt, wenn sich die Ventileinheit (130) in dem ersten Zustand befindet; und wobei
die Ventilvorrichtung (70) derart ist, dass, wenn das zweite Druckniveau ($P_{F60:1}$) unter dem ersten Umgebungsdruckniveau ($P_{A60:1}$) liegt und die Druckdifferenz ($\Delta P$) einen Schwellenwert überschreitet, die Druckdifferenz ($\Delta P$) die Ventileinheit (130) veranlasst, den zweiten Zustand anzunehmen, sodass Umgebungsfluid, wie Luft, aus der Gehäuseumgebung in den ersten Kanal (105) strömen kann; **dadurch gekennzeichnet, dass**
der Gehäusekörper ein oberes Stegelement (360, 460) umfasst, bereitgestellt an einem oberen Teil der Innenoberfläche des Gehäusekörpers, dessen oberes Stegelement mit dem beweglichen Ventilelement (131) zusammenwirkt, um einen oberen Raum (410) der Eingangsseite (210) von einem oberen Raum (420) der Ausgangsseite (220) abzutrennen, wenn das zweite Druckniveau (PF60:1) unterhalb des ersten Umgebungsdruckniveaus (PA60:1) liegt und die Druckdifferenz ($\Delta P$) den Schwellenwert überschreitet.

**2.** Ventilvorrichtung nach Anspruch 1, wobei
das obere Stegelement (360, 460) in dem ersten Kanal (105) bereitgestellt ist, um die obere Oberfläche des beweglichen Ventilelements (131) aufzunehmen, wenn sich die Ventileinheit (130) in ihrem zweiten Zustand befindet.

**3.** Ventilvorrichtung nach Anspruch 1, wobei
ein oberer Ventilsitz (260) mit dem oberen Stegelement (360, 460) derart integriert ist, dass, wenn das bewegliche Ventilelement (131) gegen den oberen Ventilsitz (260) anliegt, der Eingang (210) nicht über einen Raum über der oberen Oberfläche des Ventilelements (131) mit dem Ausgang (220) kommunizieren kann.

**4.** Ventilvorrichtung nach einem vorstehenden Anspruch, wobei

der erste Kanal (105) eine Dehnungsrichtung (227) aufweist, die sich zwischen dem Eingang (210) und dem Ausgang (220) erstreckt; und
wobei das obere Stegelement (360, 460) in dem ersten Kanal (105) bereitgestellt ist, um die obere Oberfläche des beweglichen Ventilelements (131) aufzunehmen, wenn sich die Ventileinheit (130) in ihrem zweiten Zustand befindet;

und wobei
das obere Stegelement (360, 460) sich in einer Richtung senkrecht zu der Dehnungsrichtung (227) des ersten Kanals (105) erstreckt, wobei das obere Stegelement (360, 460) mit dem beweglichen Ventilelement (131) zusammenwirkt, um mindestens einen Hohlraum (410, 420) zwischen der oberen Oberfläche des Ventilelements (131) und der Innenoberfläche (365) des ersten Kanals (105) zu bilden, wenn die Ventileinheit (130) gegen das Stegelement (360, 460, 370) anliegt.

5. Ventilvorrichtung nach einem vorstehenden Anspruch, wobei
das obere Stegelement (360, 460) derart geformt und bemessen ist, dass das obere Stegelement (360, 460) mit dem beweglichen Ventilelement (131) zusammenwirkt, um einen der Eingangsseite (210) des Ventilgehäuses (100, 200) zugewandten ersten Hohlraum (410) zu bilden und einen der Ausgangsseite (210) des Ventilgehäuses (100, 200) zugewandten zweiten Hohlraum (420) zu bilden; wobei ein erster Abschnitt der oberen Oberfläche des beweglichen Ventilelements (131) dem ersten Hohlraum (410) zugewandt ist, und ein zweiter Abschnitt der oberen Oberfläche des beweglichen Ventilelements (131) dem zweiten Hohlraum (420) zugewandt ist.

6. Ventilvorrichtung nach Anspruch 5, wobei
das obere Stegelement (460) in Bezug auf das bewegliche Ventilelement (131) geformt und positioniert ist, sodass der erste Abschnitt der oberen Oberfläche des beweglichen Ventilelements (131) größer als der zweite Abschnitt der oberen Oberfläche der Platte (131) ist.

7. Ventilvorrichtung nach Anspruch 5 oder 6, wobei
das obere Stegelement (460) in einem Abstand (a) außermittig in Bezug auf das bewegliche Ventilelement (131) positioniert ist, sodass der erste Abschnitt der oberen Oberfläche des beweglichen Ventilelements (131) größer ist als der zweite Abschnitt der oberen Oberfläche des beweglichen Ventilelements (131).

8. Ventilvorrichtung nach einem vorstehenden Anspruch, wobei
der erste Ventilsitz (140, 241) vom Boden (250) der Innenoberfläche des Gehäuses (100) erhöht ist.

9. Ventilvorrichtung nach einem vorstehenden Anspruch, wobei
der erste Ventilsitz (140) auf einem Steg (240) platziert ist, der von dem Boden (250) der Innenoberfläche des Gehäuses (100) vorsteht.

10. Ventilvorrichtung nach einem der Ansprüche 8 oder 9, wobei
der erhöhte Ventilsitz (241) mit der Innenoberfläche (105, 122) zusammenwirkt, um so einen Kanal (246) derart zu bilden, dass eine begrenzte Flüssigkeitsmenge von der Eingangsseite (210) durch den Kanal zur Ausgangsseite (220) fließen kann; und wobei
der erhöhte Ventilsitz (241) angepasst ist, um zu verhindern, dass Flüssigkeit aus dem ersten Kanal (105) heraus und in den Durchgangskanal (180) hineintröpfelt, wenn
die Ventilvorrichtung (70) sich in ihrem zweiten Zustand befindet, und
eine Schwerkraft ($F_G$) bewirkt, dass die begrenzte Flüssigkeitsmenge (245) zwischen der Ebene des erhöhten Ventilsitzes (241, 140) und dem Boden (250) der Innenoberfläche des Gehäuses (100) eine Flüssigkeitsoberfläche (248) aufweist.

11. Ventilvorrichtung nach einem vorstehenden Anspruch, wobei das Fluid eine Flüssigkeit, wie z. B. Wasser, ist.

12. Ventilvorrichtung nach einem vorstehenden Anspruch, wobei das Fluidzufuhrrohrleitungssystem ein Wassersystem zum Zuführen von Wasser von trinkbarer Qualität ist.

13. Leitungswassersystem (10, 35) zum Zuführen von Wasser von trinkbarer Qualität, wobei das Leitungswassersystem Folgendes umfasst:

ein Wasserzufuhrrohr (35, 72), das in einem Gebäude bereitgestellt ist; und
eine Ventilvorrichtung (70) nach einem vorstehenden Anspruch, die mit dem Wasserzufuhrrohr (35, 72) verbunden ist.

**Revendications**

1. Dispositif de soupape (70) à monter dans un environnement ayant un premier niveau de pression ambiante ($P_{A60:1}$), le dispositif de soupape comprenant :

un boîtier de soupape (100, 200) ayant
une entrée (210) de raccordement à un système de tuyauterie d'alimentation en fluide (35, 72) ayant un deuxième niveau de pression ($P_{F60:1}$) ;

une sortie (220) de raccordement à un conduit de sortie de fluide (74, 40, 40:1) ; et

un corps de boîtier (100, 200, 130) placé entre l'entrée (210) et la sortie (220), ledit corps de boîtier ayant une surface intérieure formant un premier canal (105) pour raccorder l'entrée (210) à la sortie (220) ; et

une unité de soupape (130) qui, en fonctionnement, est capable de commuter entre un premier état et un deuxième état dépendant d'une différence de pression ($\Delta P$) entre ledit premier niveau de pression ambiante ($P_{A60:1}$) et ledit deuxième niveau de pression (PF60:1), l'unité de soupape (130) ayant un élément de soupape mobile (131) et un canal de transit (180), dans lequel

l'élément de soupape (131) est adapté de manière à s'appuyer contre un premier siège de soupape (140), pourvu á un fond de la surface intérieure du corps de boîtier (100), de sorte que le fluide est empêché de quitter le premier canal (105) lorsque l'unité de vanne (130) est dans le premier état, et dans lequel

le dispositif de soupape (70) est tel que, lorsque le deuxième niveau de pression (PF60:1) est inférieur audit premier niveau de pression ambiante (PA60:1) et ladite différence de pression ($\Delta P$) dépasse une valeur seuil, ladite différence de pression ($\Delta P$) amène l'unité de soupape (130) à assumer ledit deuxième état si bien que le fluide ambiant, tel que l'air, peut s'écouler dans le premier canal (105) à partir de l'environnement du boîtier ; **caractérisé en ce que**

le corps de boîtier comprend un élément de nervure supérieur (360, 460) pourvu à une partie supérieure de la surface intérieure du corps de boîtier, ledit élément de nervure supérieur coopérant avec l'élément de soupape mobile (131) pour séparer un espace supérieur (410) du côté d'entrée (210) d'un espace supérieur (420) du côté sortie (220) lorsque le deuxième niveau de pression (PF60: 1) est en dessous dudit premier niveau de pression ambiante (PA60:1) et que ladite différence de pression ($\Delta P$) dépasse la valeur seuil.

**2.** Dispositif de soupape selon la revendication 1, dans lequel

l'élément de nervure supérieur (360, 460) est prévu dans le premier canal (105) de manière à recevoir la surface supérieure de l'élément de soupape mobile (131) lorsque l'unité de soupape (130) est dans son deuxième état.

**3.** Dispositif de soupape selon la revendication 1, dans lequel

un siège de soupape supérieur (260) est intégré à l'élément de nervure supérieur (360, 460) si bien que lorsque l'élément de soupape (131) s'appuie contre le siège de soupape supérieur (260), l'entrée (210) ne peut pas communiquer avec la sortie (220) via un espace quelconque au-dessus de la surface supérieure de l'élément de soupape (131).

**4.** Dispositif de soupape selon l'une quelconque des revendications précédentes, dans lequel

le premier canal (105) a une direction d'allongement (227) s'étendant entre l'entrée (210) et la sortie (220) ; et l'élément de nervure supérieur (360, 460) est prévu dans le premier canal (105) de manière à recevoir la surface supérieure de l'élément de soupape mobile (131) lorsque l'unité de soupape (130) est dans son deuxième état ; et l'élément de nervure supérieur (360, 460) s'étend dans une direction perpendiculaire à la direction (227) d'allongement du premier canal (105), ledit élément de nervure supérieur (360, 460) coopérant avec l'élément de soupape mobile (131) pour former au moins une cavité (410, 420) entre la surface supérieure de l'élément de soupape (131) et la surface intérieure (365) du premier canal (105) lorsque l'unité de soupape (130) s'appuie contre l'élément de nervure (360, 460, 370).

**5.** Dispositif de soupape selon l'une quelconque des revendications précédentes, dans lequel

l'élément de nervure supérieur (360, 460) est formé et dimensionné si bien que ledit élément de nervure supérieur (360, 460) coopère avec l'élément de soupape mobile (131) pour former une première cavité (410) faisant face au côté d'entrée (210) du boîtier de soupape (100, 200) et pour former une deuxième cavité (420) faisant face au côté de sortie (210) du boîtier de soupape (100, 200) ; dans lequel une première partie de la surface supérieure de l'élément de soupape mobile (131) fait face à la première cavité (410), et une deuxième partie de la surface supérieure de l'élément de soupape mobile (131) fait face à la deuxième cavité (420).

**6.** Dispositif de soupape selon la revendication 5, dans lequel

l'élément de nervure supérieur (460) est formé et positionné par rapport à l'élément de soupape mobile (131) si bien que ladite première partie de la surface supérieure de l'élément de soupape mobile (131) est supérieure à ladite deuxième partie de la surface supérieure de plaque (131).

**7.** Dispositif de soupape selon la revendication 5 ou 6, dans lequel

l'élément de nervure supérieur (460) est positionné à une distance (a) décentrée par rapport à l'élément de soupape mobile (131) si bien que ladite première partie de la surface supérieure de l'élément de soupape mobile (131) est supérieure à ladite deuxième partie de la surface supérieure de l'élément de soupape mobile (131).

8. Dispositif de soupape selon l'une quelconque des revendications précédentes, dans lequel
le premier siège de soupape (140, 241) est surélevé par rapport au fond (250) de la surface intérieure du boîtier (100).

9. Dispositif de soupape selon l'une quelconque des revendications précédentes, dans lequel
le premier siège de soupape (140) est placé sur une arête (240) faisant saillie du fond (250) de la surface intérieure du boîtier (100).

10. Dispositif de soupape selon l'une quelconque des revendications 8 ou 9, dans lequel
le siège de soupape surélevé (241) coopère avec ladite surface intérieure (105, 122) de manière à former un canal (246) si bien qu'une quantité limitée de liquide peut s'écouler du côté d'entrée (210) vers le côté de sortie (220) via le canal ; et dans lequel
le siège de soupape élevé (241) est adapté pour empêcher le liquide de s'écouler du premier canal (105) dans ledit canal de transit (180) lorsque
le dispositif de soupape (70) est dans son deuxième état, et
une force gravitationnelle ($F_G$) amène la quantité limitée de liquide (245) à avoir une surface liquide (248) entre le plan du siège de soupape surélevé (241, 140) et le fond (250) de la surface intérieure du boîtier (100).

11. Dispositif de soupape selon l'une quelconque des revendications précédentes, dans lequel ledit fluide est un liquide, tel que par ex. eau.

12. Dispositif de soupape selon l'une quelconque des revendications précédentes, dans lequel ledit système de tuyauterie d'alimentation en fluide est un système d'alimentation en eau pour fournir de l'eau de qualité potable.

13. Système d'eau du robinet (10, 35) pour fournir de l'eau de qualité potable, le système d'eau du robinet comprenant :

un tuyau d'alimentation en eau (35, 72) prévu dans un bâtiment ; et
un dispositif de soupape (70) selon l'une quelconque des revendications précédentes, raccordé audit tuyau d'alimentation en eau (35, 72).

*Fig. 1*

*Fig. 2*

EP 2 771 602 B1

Fig. 3A

Fig. 3B

**Fig. 4A**

**Fig. 4B**

**Fig. 4C**

**Fig. 4D**

**Fig. 4E**

**Fig. 4F**

**Fig. 5A**

**Fig. 5B**

**Fig. 5C**

**Fig. 5D**

**Fig. 5E**

**Fig. 5F**

Fig. 6A

Fig. 6B

Fig. 6C

Fig. 6D

Fig. 6E

Fig. 6F

**Fig. 7A**

**Fig. 7B**

140
241

240

242

244

241

200

200

F_G

260    A    131

220    105

229

245    210

250

245

180    A

**Fig. 7C**

246    131

245, 248

246

P_A60    A-A

**Fig. 7D**

227    B

B

**Fig. 7E**

B-B

**Fig. 7F**

Fig. 8A

Fig. 8B

Fig. 8C

Fig. 8D

EP 2 771 602 B1

34

Fig. 9A

Fig. 9B

Fig. 9C

Fig. 9D

Fig. 9E

Fig. 9F

Fig. 10A

Fig. 10B

Fig. 10C

Fig. 10D
A-A

Fig. 10E

Fig. 10F
B-B

**Fig. 11A**

**Fig. 11B**

**Fig. 11C**

**Fig. 12**

Fig. 13A

Fig. 13B

Fig. 13C

Fig. 14

Fig. 15

Fig. 16

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1375988 A

- US 2990843 A